# EUROPEAN PATENT APPLICATION

(11) **EP 2 871 637 A1**
(43) Date of publication of application: **13.05.2015**
(21) Application number: 13813851.6
(22) Date of filing: 03.07.2013
(51) Int. Cl.: G10K 11/16, B32B 5/18, B60R 13/08, G10K 11/162

(54) **SOUNDPROOF MATERIAL**

(30) Priority: 04.07.2012 JP 2012150520; 04.07.2012 JP 2012150523; 04.07.2012 JP 2012150525; 04.07.2012 JP 2012150527
(71) Applicant: Nishikawa Rubber Co., Ltd., Hiroshima-shi, Hiroshima 733-8510 (JP)
(72) Inventor: ARATA, Mitsuaki, Hiroshima-shi Hiroshima 733-8510 (JP); KANEDA, Hiroaki, Hiroshima-shi Hiroshima 733-8510 (JP); EMORI, Shinichiro, Hiroshima-shi Hiroshima 733-8510 (JP); KAMEOKA, Taisuke, Hiroshima-shi Hiroshima 733-8510 (JP); KOHARA, Yoshihiro, Hiroshima-shi Hiroshima 733-8510 (JP); IKUMA, Yoshihiro, Hiroshima-shi Hiroshima 733-8510 (JP)
(74) Representative: BRP Renaud & Partner mbB Rechtsanwälte Patentanwälte Steuerberater
(86) International application number: PCT/JP2013/004134
(87) International publication number: WO 2014/006896

(57) **Abstract**

The performance of a sound insulation material in which chips (12) are utilized is improved. The sound insulation material includes a chip layer (21) containing many chips (12). The chip layer (21) is covered with a coat, and the chip layer (21) includes an unbreathable intermediate membrane layer (27) dividing the chip layer (21) into a plurality of layers.

## Description

### TECHNICAL FIELD

The present disclosure relates to sound insulation materials.

### BACKGROUND ART

Vehicles, such as motor vehicles, or buildings include a sound absorbing material to allow, for example, their interiors to be quiet. For example, a wheel well of each of fenders of a motor vehicle (automobile) includes an inner fender, and a sound insulation material, such as a sound absorbing material, and is sometimes placed, as a countermeasure against road noise, on such an inner fender. PATENT DOCUMENT 1 describes that a sound absorbing material made of, for example, nonwoven fabric or urethane sponge is placed on an inner fender of a motor vehicle.

A sound absorbing material including two or more different types of stacked materials has been also known. For example, PATENT DOCUMENTS 2 and 3 each describe a sound absorbing material for an inner fender. The sound absorbing material includes a sound-absorbing base material, such as nonwoven fabric, and a water-resistant film placed thereon.

PATENT DOCUMENT 4 describes that a sound absorbing material that is a breathable container filled with foam chips is used for, for example, motor vehicles, and also describes that examples of the breathable container include a bag made of a breathable sheet, such as nonwoven fabric, an olefinic elastomer, for example, is used as a material of the foam chips, the size of each of the foam chips is 2-20 mm, and the foam chips are compressed so as to be charged into the breathable container.

PATENT DOCUMENT 5 describes that a sound absorbing material including pulverized foam particles into which styrenic resin foam is pulverized which are enclosed in a breathable or unbreathable bag-like object is used for, for example, motor vehicles.

PATENT DOCUMENT 6 describes that a dash silencer placed on a dash panel of a motor vehicle has a layered structure including nonwoven fabric having an airflow resistance of greater than or equal to 200 Nsm⁻³ and equal to or less than 1000 Nsm⁻³ and felt having a thickness of 5-50 mm and a surface density of 200-3000 g/m².

### CITATION LIST

### PATENT DOCUMENTS

PATENT DOCUMENT 1: Japanese Unexamined Patent Publication No. 2010-006312
PATENT DOCUMENT 2: Japanese Patent No. 3675359
PATENT DOCUMENT 3: Japanese Unexamined Patent Publication No. 2011-240821
PATENT DOCUMENT 4: Japanese Unexamined Patent Publication No. 2005-316353
PATENT DOCUMENT 5: Japanese Unexamined Patent Publication No. 2003-150169
PATENT DOCUMENT 6: Japanese Unexamined Patent Publication No. 2002-264736

### SUMMARY OF THE INVENTION

### TECHNICAL PROBLEM

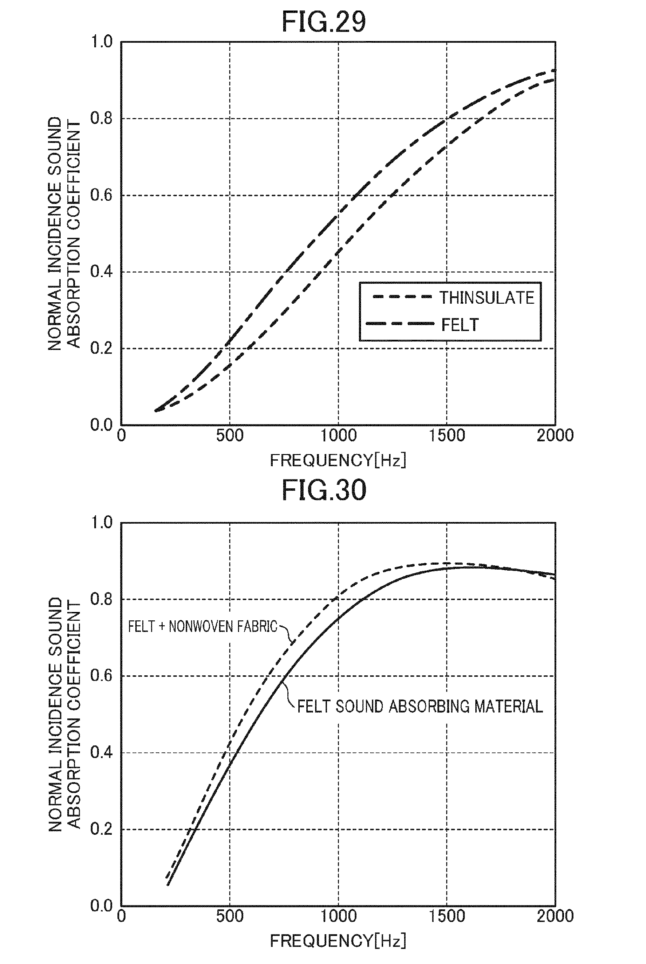

A fibrous sound absorbing material, such as felt or Thinsulate (trademark), has been widely used in inner fenders of motor vehicles. However, as illustrated in FIG. 29, while the fibrous sound absorbing material offers relatively high sound absorption performance in a situation where target sound to be absorbed is within the range of high frequencies greater than or equal to 1500 Hz, it has a low sound absorption coefficient in a situation where the target sound is within the range of lower frequencies. In other words, while, in a motor vehicle, noise, such as engine sound or road noise, having a frequency of about 1000 Hz or less is problematic, a conventional fibrous sound absorbing material does not offer expected sound absorption performance.

As described in PATENT DOCUMENTS 4 and 5, elastomeric foam chips are charged into a breathable or unbreathable bag such that the breathable or unbreathable sheet material is placed over a layer forming the elastomeric foam chips. However, excellent sound absorption performance is not necessarily achieved.

Furthermore, felt has been widely used as a sound absorbing material. However, even if nonwoven fabric is stacked on the felt, the sound absorption performance of the resultant sound absorbing material hardly varies. FIG. 30 is a graph illustrating the normal incidence sound absorption coefficient of each of a sound absorbing material made of only felt having an airflow resistance of the order of 10⁴ Ns/m⁴ and a sound absorbing material containing the felt and nonwoven fabric which is stacked on the felt and has an airflow resistance of the order of 10⁶ Ns/m⁴. This figure shows that even if nonwoven fabric is stacked on felt, the frequency of target sound to be absorbed at the peak of the sound absorption coefficient is merely slightly shifted toward lower frequencies, and an increase in sound absorption coefficient is hardly expected.

With increasing thickness of a sound insulation material, the sound insulation performance thereof naturally increases. However, when the sound insulation material is intended for use in an inner fender, and is provided in the tight gap between the inner fender and a fender, the thickness of the sound insulation material can be increased only to a limit value.

The present disclosure, therefore, relates to sound insulation materials, and is configured to further improve the sound insulation performance of a sound insulation material without excessively increasing the thickness thereof

Furthermore, the present disclosure is configured to easily achieve desired frequency characteristics of absorbed sound.

### SOLUTION TO THE PROBLEM

In the present disclosure, in order to solve the problems, an unbreathable intermediate membrane is located inside a layer including chips, such as elastomeric foam chips. The present disclosure will be specifically described hereinafter.

A sound insulation material herein includes: a chip layer containing many chips. The chip layer is covered with a coat, and the chip layer includes an unbreathable intermediate membrane layer dividing the chip layer into a plurality of layers.

Specifically, in a case where, for example, the sound absorbing material described in PATENT DOCUMENT 5 includes pulverized foam particles enclosed in an unbreathable bag-like object, it can be said that the sound absorbing material also includes a chip layer and an unbreathable layer. However, the unbreathable layer is merely placed over the chip layer, and is not provided inside the chip layer.

In contrast, according to the present disclosure, the unbreathable intermediate membrane layer is located in the chip layer. This allows the sound absorption effect in a low frequency range to be stronger than that of a sound insulation material including only a chip layer. The reason for this may be as follows.

Specifically, the viscous losses produced by the motion of air around the individual chips due to the entry of sound into the chip layer, the friction losses between the air and the chips, the friction losses between the chips, and the internal losses produced by vibration of the chips themselves may allow the chip layer to offer the sound absorption effect. In contrast, since the intermediate membrane layer is unbreathable, it can have the sound absorption effect arising from the internal losses produced by membrane vibration of the intermediate membrane layer itself on entry of sound into the intermediate membrane layer instead of the sound absorption effect arising from, for example, the viscous losses. In this case, the chip layer is a flexible layer containing many chips, and thus, allows the membrane vibration of the entire intermediate membrane layer and the local membrane vibration of the intermediate membrane layer. A high sound absorption coefficient is obtained at the resonance frequency at which the amplitude of the membrane vibration is maximum. The frequency of absorbed sound at the peak of the sound absorption coefficient of the intermediate membrane layer is lower than that of absorbed sound at the peak of the sound absorption coefficient of the chip layer, because the intermediate membrane layer absorbs sound due to the membrane vibration.

Thus, some of the chips closer to a surface of the chip layer through which target sound to be insulated enters the chip layer than the intermediate membrane layer help absorb sound having relatively higher frequencies, the intermediate membrane layer helps absorb sound having lower frequencies, and the other chips closer to the back surface of the chip layer than the intermediate membrane layer help absorb or insulate sound transferred through the intermediate membrane layer.

As such, in the sound insulation material according to the present disclosure, the sound absorption function arising from the resonance of the unbreathable intermediate membrane layer is added to the sound absorption function of the chip layer. Thus, the sound absorption effect of the entire sound insulation material in a low frequency range is stronger than that of a sound insulation material including only a chip layer. In other words, the unbreathable intermediate membrane layer having an acoustic impedance different from that of the chip layer is located in the chip layer, thereby shifting the frequency at the peak of the sound absorption coefficient toward lower frequencies without increasing the thickness of the entire sound insulation material. Furthermore, since the intermediate membrane layer is unbreathable, the sound insulation effect is achieved.

Here, the frequency characteristics of sound absorbed by the sound insulation material vary depending on the location of the intermediate membrane layer in the chip layer. Specifically, with decreasing distance from the intermediate membrane layer to an entry-side coat through which target sound to be insulated enters the sound insulation material, the intermediate membrane layer is more susceptible to sound having lower frequencies, and the amount of chips being closer to the surface of the chip layer through which sound enters the sound insulation material than the intermediate membrane layer and being effective in absorbing sound having higher frequencies decreases. Thus, the amount by which the frequency at the peak of the sound absorption coefficient of the entire sound insulation material is shifted toward lower frequencies increases. Alternatively, with decreasing distance from the intermediate membrane layer to a back-surface-side coat opposite to the entry-side coat, the sound absorption effect of the intermediate membrane layer in a low frequency range is reduced, and the amount of chips closer to the surface of the chip layer through which sound enters the sound insulation material than the intermediate membrane layer increases. Thus, the amount by which the frequency at the peak of the sound absorption coefficient of the entire sound insulation material is shifted toward lower frequencies decreases.

As such, the sound insulation material according to the present disclosure facilitates adjusting the frequency characteristics of absorbed sound to desired characteristics.

The unbreathable intermediate membrane layer may be made of a single unbreathable membrane to separate the chip layer into two layers. Alternatively, the unbreathable intermediate membrane layer may include a plurality of unbreathable membranes spaced from each other in the chip layer such that the chip layer is divided into three or more layers.

In a preferred aspect of the present disclosure, not only the intermediate membrane layer, but also a portion of the coat covering one of surfaces of the chip layer is unbreathable. This enhances the sound insulation performance of the sound insulation material. On the other hand, when the unbreathable portion of the coat blocks incident sound, the sound absorption coefficient of the chip layer in a high frequency range decreases. However, what is unique is that the presence of the unbreathable intermediate membrane layer not only increases the sound absorption coefficient in a low frequency range, but also reduces the size of a dip in a high frequency range, and, as a whole, increases the sound absorption coefficient in a wide frequency range. Although the reason for this is not certain, the unbreathable intermediate membrane layer that possesses properties different from those of the chips is located in the chip layer, and the internal acoustic impedance of the chip layer may therefore vary at midpoint. This may be effective in absorbing sound having higher frequencies.

As such, according to the aspect, the provision of the unbreathable portion of the coat and the unbreathable intermediate membrane layer having an acoustic impedance different from that of the chip layer allows the frequency at the peak of the sound absorption coefficient of the sound insulation material to be shifted toward lower frequencies without increasing the thickness of the entire sound insulation material, and increases the sound absorption coefficient in a wide frequency range, and excellent sound insulation performance is achieved.

While the unbreathable portion of the coat may include only an unbreathable membrane, it may have a two-layer structure of an unbreathable membrane and a breathable membrane which are placed one over the other. In this case, either of the unbreathable membrane and the breathable membrane may be placed outwardly.

A portion of the coat covering the other one of the surfaces of the chip layer may be either breathable or unbreathable. However, when the portion of the coat is breathable, the chip layer is easily compressed. In other words, since the chip layer contains the many chips, the sound absorption effect is enhanced, and if the chip layer is compressed, the thickness of the chip layer can be changed. For this reason, even if the size of the space in which the sound insulation material is to be placed, such as the gap between a wheel well of a fender and a corresponding inner fender, is small, the sound insulation material can be compressed depending on the gap size, and thus, can be placed in the space.

When a portion of the coat covering one of the surfaces of the chip layer opposite to the other surface of the chip layer through which sound enters the sound insulation material, i.e., the back-surface-side coat, is unbreathable, the back-surface-side coat is effective in insulating sound, and the sound insulation performance is enhanced. Furthermore, the unbreathable back-surface-side coat has waterproofness, and prevents water from penetrating the chip layer. This helps maintain the sound absorption performance and improve the durability of the sound insulation material. In particular, when the sound insulation material is placed on a member which tends to be exposed to water, such as the inner fender, it is significant that the back-surface-side coat is unbreathable.

When an unbreathable coat is used as the back-surface-side coat, only a portion of the coat, such as a peripheral portion thereof or corner portions thereof, may be breathable. This enables the discharge of air when the chip layer is compressed, and allows variations in acoustic impedance.

In a case where a portion of the coat through which sound enters the sound insulation material is unbreathable, the airflow resistance of the chip layer along the thickness thereof is preferably greater than or equal to 1 × 10² Ns/m⁴ and equal to or less than 1 × 10⁴ Ns/m⁴, and is more preferably on the order of 10³ Ns/m⁴ (greater than or equal to 1 × 10³ Ns/m⁴ and less than 1 × 10⁴ s/m⁴). Thus, the unbreathable portion of the coat and the intermediate membrane layer combine to help increase the sound absorption coefficient in a wide frequency range.

In a case where the portion of the coat through which sound enters the sound insulation material is breathable, the airflow resistance of the chip layer along the thickness thereof is preferably greater than or equal to 1 × 10² Ns/m⁴ and equal to or less than 1 × 10⁴ Ns/m⁴, and is more preferably on the order of 10³ Ns/m⁴, and the airflow resistance of the breathable portion of the coat along the thickness thereof is in the range from on the order of 10⁵ Ns/m⁴ to on the order of 10⁸ Ns/m⁴ (greater than or equal to 1 × 10⁵ Ns/m⁴ and less than 1 × 10⁹ Ns/m⁴). Thus, the chip layer and the breathable portion of the coat combine to offer excellent sound absorption performance. In other words, the peak of the sound absorption coefficient of the sound insulation material is much higher than that of the sound absorption coefficient of a sound absorbing material including only a chip layer, and the frequency range within which the sound absorption effect is achieved unexpectedly increases.

The airflow resistance of the breathable portion of the coat is more preferably set in the range from on the order of 10⁵ s/m⁴ to on the order of 10⁷ Ns/m⁴ (greater than or equal to 1 × 10⁵ Ns/m⁴ and less than 1 × 10⁸ Ns/m⁴), and is further preferably set in the range from on the order of 10⁶ s/m⁴ to on the order of 10⁷ Ns/m⁴ (greater than or equal to 1 × 10⁶ Ns/m⁴ and less than 1 × 10⁸ Ns/m⁴).

The sound insulation material including the unbreathable intermediate membrane layer can be obtained by enclosing many chips in, for example, a flat bag (a less uneven and flat bag). Specifically, the flat bag is a bag the interior of which is partitioned into a space near one surface of the flat bag and a space opposite to the space near the one surface by an unbreathable membrane, and the many chips are charged into each of the spaces. In this case, both surfaces of the flat bag form coats. In other words, the one surface of the flat bag forms the entry-side coat, and the other surface of the flat bag forms the back-surface-side coat. The unbreathable membrane forms the unbreathable intermediate membrane layer, and the many chips charged into both of the spaces form the chip layer.

The flat bag can be obtained by placing, for example, three sheets for forming the entry-side coat, the back-surface-side coat, and the intermediate membrane layer one over another and bonding peripheral portions of the sheets placed one over another together. The peripheral portions of the sheets placed one over another need to be bonded together to the extent that the contents of the flat bag, such as the chips, do not exit, and not only heat sealing, but also any appropriate processes, such as adhesive bonding or stitching, can be used to bond them together. Alternatively, a single sheet and a sheet for the intermediate membrane layer may be placed one over the other such that the sheet for the intermediate membrane layer is interposed between two parts into which the single sheet is folded, and peripheral portions of the sheets placed one over the other may be bonded together. In this case, one of the two parts into which the single sheet is folded serves as the entry-side coat, and the other one thereof serves as the back-surface-side coat.

When the coat has a two-layer structure of an unbreathable membrane and a breathable membrane, one of the surfaces of the flat bag, for example, may have a two-layer structure of an outer breathable membrane and an inner unbreathable membrane placed one over the other.

A sound insulation material according to another preferred aspect of the present disclosure includes a chip layer containing many chips. One of surfaces of the chip layer is covered with an unbreathable coat, and the other one of the surfaces of the chip layer is covered with a breathable coat.

While PATENT DOCUMENT 5 describes a sound absorbing material including pulverized foam particles enclosed in a breathable or unbreathable bag-like object, it does not describe that one of surfaces of a chip layer (for example, a surface thereof through which sound enters the sound absorbing material) is covered with a breathable coat, and the other surface thereof is covered with an unbreathable coat.

In contrast, according to the aspect, a combination of the chip layer and the breathable coat covering the one of the surfaces of the chip layer enhances the sound absorption performance in a relatively wide frequency range, and as described above, the unbreathable coat covering the other surface of the chip layer offers the sound insulation effect. Thus, the sound insulation performance is enhanced as a whole.

The sound insulation material is preferably provided on a motor vehicle such that the breathable coat faces outwardly of the motor vehicle to allow target sound for insulation, such as road noise, to enter the sound insulation material therethrough, and the unbreathable coat faces inwardly of the motor vehicle. In this case, the inner unbreathable coat has waterproofness, and thus prevents water from penetrating the chip layer. This helps maintain the sound absorption performance of the chip layer and improve the durability of the sound insulation material. Since, in particular, the sound insulation material placed on the inner fender tends to be exposed to water, it is significant that the inner coat is unbreathable.

The airflow resistance of the chip layer along the thickness of the chip layer is more preferably greater than or equal to 1 × 10² Ns/m⁴ and equal to or less than 1 × 10⁴ Ns/m⁴, and is further preferably on the order of 10³ Ns/m⁴, and the airflow resistance of the breathable coat along the thickness of the breathable coat is further preferably in the range from on the order of 10⁵ Ns/m⁴ to on the order of 10⁸ Ns/m⁴. Thus, the chip layer and the breathable coat combine to offer excellent sound absorption performance. In other words, the peak of the sound absorption coefficient of the sound insulation material is much higher than that of the sound absorption coefficient of a sound insulation material including only a chip layer, and the frequency range within which the sound absorption effect is achieved unexpectedly increases.

This is shown by data on the sound absorption characteristics described below. Although the reason why such an effect is achieved is not necessarily clear, it may be as follows.

Specifically, as described above, the viscous losses produced by the motion of air around individual chips due to the entry of sound into the chip layer, the friction losses between the air and the chips, the friction losses between the chips, and the internal losses produced by vibration of the chips themselves may allow the chip layer to offer the sound absorption effect. In contrast, the breathable coat may offer not only the sound absorption effect arising from the viscous losses and the friction losses, but also the sound absorption effect arising from the internal losses produced by vibration of the coat on the entry of sound into the coat, and the latter sound absorption effect is stronger than the former sound absorption effect. In this case, while the coat has a high sound absorption coefficient at the resonance frequency at which the amplitude of the membrane vibration is maximum, the resonance frequency varies depending on the airflow resistance of the coat.

As described above, the airflow resistance of the breathable coat is set in the range from on the order of 10⁵ Ns/m⁴ to on the order of 10⁸ Ns/m⁴. Thus, the resonance frequency of the coat appears in the range of frequencies relatively close to the frequency at the peak of the sound absorption coefficient of the chip layer. In addition, sound waves may pass through the coat having the airflow resistance to some extent, and sound is, therefore, absorbed by the chip layer. For this reason, a combination of the sound absorption function of the chip layer and the sound absorption function due to the resonance of the breathable coat may significantly increase the sound absorption coefficient of the entire sound absorbing material. The frequency at the peak of the sound absorption coefficient of the chip layer is different from that at the peak of the sound absorption coefficient of the breathable coat, and the resonance frequency of the coat having a higher airflow resistance is lower than that of the chip layer. For this reason, the sound absorption coefficient of the sound insulation material may increase in a wide frequency range.

The airflow resistance of the breathable coat is more preferably set in the range from on the order of 10⁵ Ns/m⁴ to on the order of 10⁷ Ns/m⁴, and is further preferably set in the range from on the order of 10⁶ Ns/m⁴ to on the order of 10⁷ Ns/m⁴.

The sound insulation material according to the aspect can be obtained by enclosing many chips in, for example, a flat bag. Specifically, the flat bag internally includes an unbreathable sheet, and the chips are charged between one of surfaces of the flat bag and the unbreathable sheet. In this case, the one of the surfaces of the flat bag forms the breathable coat, the unbreathable sheet forms the unbreathable coat, and the many chips charged between the one of the surfaces of the flat bag and the unbreathable sheet form the chip layer.

The flat bag can be obtained by interposing a sheet forming the unbreathable coat between two sheets forming both the surfaces of the flat bag and bonding peripheral portions of the sheets placed one over another together. The peripheral portions of the sheets placed one over another need to be bonded together to the extent that the contents of the flat bag, such as the chips, do not exit, and not only heat sealing, but also any appropriate processes, such as adhesive bonding or stitching, can be used to bond them together. Alternatively, a single sheet and a sheet for the intermediate membrane layer may be placed one over the other such that the sheet for the intermediate membrane layer is interposed between two parts into which the single sheet is folded, and peripheral portions of the sheets placed one over the other may be bonded together. In this case, the folded single sheet forms both the surfaces of the flat bag.

A sound insulation material according to still another preferred aspect of the present disclosure includes a chip layer containing many chips; and a breathable coat covering at least one of surfaces of the chip layer. The airflow resistance of the chip layer along a thickness of the chip layer is on the order of 10³ Ns/m⁴, and the airflow resistance of the breathable coat along the thickness of the breathable coat is in the range from on the order of 10⁵ Ns/m⁴ to on the order of 10⁸ Ns/m⁴.

The sound absorbing material described in PATENT DOCUMENT 4 also includes foam chips charged into a bag including a breathable sheet made of, for example, nonwoven fabric, and it may be, therefore, said that the sound absorbing material includes a chip layer and a coat. However, PATENT DOCUMENT 4 merely describes that the breathable sheet and the foam chips are combined together, and is silent on the airflow resistance of each of the breathable sheet and the foam chips. PATENT DOCUMENT 6 also merely determines the airflow resistance of nonwoven fabric in a combination of the same types of materials, i.e., the nonwoven fabric and felt.

In contrast, according to the present disclosure, in a case where the airflow resistance of the chip layer is on the order of 10³ Ns/m⁴, the airflow resistance of the coat is set in the range from on the order of 10⁵ Ns/m⁴ to on the order of 10⁸ Ns/m⁴. Thus, the peak of the sound absorption coefficient of the sound insulation material is much higher than that of the sound absorption coefficient of a sound absorbing material including only a chip layer, and the frequency range within which the sound absorption effect is achieved unexpectedly increases.

The airflow resistance of the coat is more preferably set in the range from on the order of 10⁵ Ns/m⁴ to on the order of 10⁷ Ns/m⁴, and is further preferably set in the range from on the order of 10⁶ Ns/m⁴ to on the order of 10⁷ Ns/m⁴.

The sound absorbing material according to the aspect can be obtained by enclosing many chips in, for example, a flat bag. In this case, one of surfaces of the flat bag forms the coat, and the many chips enclosed in the flat bag form the chip layer. The flat bag can be obtained by placing, for example, two sheets of, for example, nonwoven fabric one over the other or folding a single sheet and bonding peripheral portions of the sheets placed one over the other or peripheral portions of overlapping parts of the folded sheet together. The peripheral portions need to be bonded together to the extent that the contents of the flat bag, such as the chips, do not exit, and not only heat sealing, but also any appropriate processes, such as adhesive bonding or stitching, can be used to bond them together.

Since the chip layer contains the many chips, the sound absorption effect is enhanced, and the compression of the chip layer enables a change in thickness of the chip layer. Thus, even if the gap between a wheel well of a fender and a corresponding inner fender is tight, the sound insulation material can be compressed depending on the gap size, and thus, can be placed in the gap. Here, if a breathable material is used as a material of at least one of the entry-side coat or the back-surface-side coat, the chip layer is easily compressed.

The chips can be, for example, strap-shaped, spherical, irregularly granular, or flaky, and the shape of each of the chips is not limited. Examples of a material of the chips include, but not limited to, rubber, plastic, wood, and paper. Whether or not the chips are foamed is not limited. The flaky chips may be curled, or have, for example, a distorted shape with an uneven surface or a crimpy shape having a splintered edge.

While the chip layer is preferably elastic or resilient after being compressed, the individual chips do not always need to be elastic or resilient after being compressed. For example, elastic bendings of curled flaky chips may allow the chip layer to be elastic or resilient after being compressed.

The dynamic longitudinal elastic modulus of the chip layer during repeated compression and compression release cycles within the range from 100 Hz to 1000 Hz is preferably greater than or equal to 1 × 10⁵ N/m² and equal to or less than 1 × 10⁷ N/m², and is more preferably greater than or equal to 4 × 10⁵ N/m² and equal to or less than 5 × 10⁶ N/m². The loss factor of the chip layer within the range from 100 Hz to 1000 Hz is preferably greater than or equal to 0.05 and equal to or less than 0.5, and is more preferably greater than or equal to 0.1 and equal to or less than 0.4.

The density (absolute specific gravity) of each of the chips is preferably greater than or equal to about 0.01 g/cm³ and equal to or less than about 1.5 g/cm³, and is more preferably greater than or equal to about 0.03 g/cm³ and equal to or less than about 0.5 g/cm³. The chips preferably have, in particular, a volume density (apparent density under conditions where the chips are charged into a container in a free state (uncompressed state)) of greater than or equal to 0.01 g/cm³ and equal to or less than 0.99 g/cm³, more preferably greater than or equal to 0.03 g/cm³ and equal to or less than 0.5 g/cm³.

The chips are preferably irregularly granular elastomeric foam chips (which have not a regular shape, such as a die shape, a spherical shape, a strap shape, or a rectangular-sheet-like shape, but irregular shapes (different shapes), and have different sizes). The average particle size of the chips is preferably, for example, about 0.5-5 mm, and the range of the particle sizes of the chips is preferably, for example, about 0.1-10 mm.

While, for example, olefinic ethylene-propylene-diene copolymer (EPDM) rubber foam can be preferably used as the elastomeric foam chips, foam made of any other rubber or any other elastic material, such as natural rubber (NR), isoprene rubber (IR), styrenebutadiene rubber (SBR), chloroprene rubber (CR), a thermoplastic elastomer (olefinic or styrenic thermoplastic elastomer), or soft polyvinyl chloride, may be used. Note that in order to enhance the sound absorption performance, the cells of the foam (pores of a sponge) forming the elastomeric foam chips are preferably exposed at the surface of the foam without covering at least part of the foam with a skin layer. In other words, the uneven surface of the foam is preferably exposed.

The chips may be foam chips made of a thermoplastic resin (plastic) that is not an elastic material. The thermoplastic resin is not limited as long as it is a material for use in general industry, such as an olefinic resin, a styrenic resin, an amic resin, an epoxy resin, an urethane resin, or a polyester resin. However, in particular, olefinic polypropylene (PP), olefinic polyethylene (PE), or a polymer of them is preferably used.

The chips may be unfoamed chips. The unfoamed chips may be irregularly granular chips (which have not a regular shape, such as a die shape, a spherical shape, a strap shape, or a rectangular-sheet-like shape, but irregular shapes (different shapes), and have different sizes), and may be chips into which, for example, a thick or thin sheet-like object is pulverized and which each have an uneven surface with partially crimpy protrusions. The average particle size of portions of the chips except crimpy portions of the chips protruding from the main bodies of the chips is preferably, for example, about 0.5-10 mm, and the range of the particle sizes of the chips is preferably, for example, about 0.1-20 mm. An elastic material or an inelastic material exemplified as a material of the above-described elastomeric foam chips and foam chips is preferably used as a material of such chips.

The chip layer may include elastomeric foam chips alone, foamed chips alone, unfoamed chips alone, or a mixture of two or more types of chips. The chip layer may contain the chips as the main ingredient (for example, 80% or more in volume), and may contain any other sound absorbing material or filler, such as fiber material or powder of inorganic material (for example, silica or mica) in addition to the chips. The thickness of the chip layer is determined by the size of a space in which the sound insulation material is placed. As long as the thickness of the chip layer is greater than or equal to 5 mm and equal to or less than 100 mm, intended sound absorption performance can be obtained. Naturally, in order to further enhance the sound absorption performance, the thickness of the chip layer can be greater than 100 mm. The surface density of the entire sound insulation material may be greater than or equal to about 1 kg/m² and equal to or less than about 4 kg/m².

When the coat is made of a breathable material, nonwoven fabric or woven fabric made of natural fibers or artificial fibers can be preferably used. Naturally, the artificial fibers may be organic or inorganic fibers or paper, and the material of the artificial fibers is not specifically limited. The coat may be made of, for example, an unbreathable resin sheet having many vent holes. The thickness of the coat is preferably, for example, greater than or equal to about 0.01 mm and equal to or less than about 3 mm, and is more preferably equal to or less than 1.0 mm. The surface density of the entry-side coat is preferably, for example, greater than or equal to 80 g/m² and equal to or less than 500 g/m², and is more preferably equal to or less than 150 g/m². Here, the material of the unbreathable resin sheet having the many vent holes may be polyethylene, and the thickness of the coat made of the unbreathable resin sheet may be greater than or equal to 0.01 mm and equal to or less than 1 mm, preferably equal to or less than 0.5 mm.

A polyethylene sheet or any other resin sheets having a thickness of greater than or equal to about 0.01 mm and equal to or less than about 0.5 mm and an airflow resistance of greater than or equal to 1 × 10⁹ Ns/m⁴ may be used as a material of the unbreathable intermediate membrane layer or a material of the coat used when the coat is made of an unbreathable material.

### ADVANTAGES OF THE INVENTION

As described above, according to the present disclosure, the sound insulation performance of the sound insulation material can be enhanced without excessively increasing the thickness thereof, and the desired frequency characteristics of absorbed sound can be easily obtained.

### BRIEF DESCRIPTION OF THE DRAWINGS

[FIG. 1] FIG. 1 is a perspective view illustrating an example motor vehicle in which a sound insulation material according to the present disclosure is used.
[FIG. 2] FIG. 2 is a perspective view illustrating an inner fender and the sound insulation material.
[FIG. 3] FIG. 3 is a partially cutaway perspective view illustrating a sound insulation material 6A.
[FIG. 4] FIG. 4 is a perspective view illustrating an example of manufacture of the sound insulation material 6A.
[FIG. 5] FIG. 5 is a cross-sectional view of the sound insulation material 6A (an enlarged view of a portion A of the sound insulation material 6A indicated by the chain line circle in FIG. 3).
[FIG. 6] FIG. 6 is a partially cutaway perspective view illustrating a sound insulation material 6B.
[FIG. 7] FIG. 7 is a perspective view illustrating an example of manufacture of the sound insulation material 6B.
[FIG. 8] FIG. 8 is a cross-sectional view of the sound insulation material 6B (an enlarged view of a portion A of the sound insulation material 6B indicated by the chain line circle in FIG. 6).
[FIG. 9] FIG. 9 is a partially cutaway perspective view illustrating a sound insulation material 6C.
[FIG. 10] FIG. 10 is a perspective view illustrating an example of manufacture of the sound insulation material 6C.
[FIG. 11] FIG. 11 is a cross-sectional view of the sound insulation material 6C (an enlarged view of a portion A of the sound insulation material 6C indicated by the chain line circle in FIG. 9).
[FIG. 12] FIG. 12 is a cross-sectional view of a sound insulation material 6D (in a manner similar to that in FIG. 11).
[FIG. 13] FIG. 13 is a graph illustrating the dynamic longitudinal elastic moduli of chip layers.
[FIG. 14] FIG. 14 is a graph illustrating the loss factors of the chip layers.
[FIG. 15] FIG. 15 is a graph illustrating the sound absorption characteristics of each of samples of the sound insulation material 6A.
[FIG. 16] FIG. 16 is a graph illustrating the relationship between the compressibility and airflow resistance of a chip layer.
[FIG. 17] FIG. 17 is a graph illustrating the influence of the compressibility of the chip layer on the sound absorption characteristics of a sound insulation material.
[FIG. 18] FIG. 18 is a graph illustrating the sound absorption characteristics of each of samples of the sound insulation material 6B.
[FIG. 19] FIG. 19 is a graph illustrating the transmission loss of each of the samples of the sound insulation material 6B.
[FIG. 20] FIG. 20 is a graph illustrating the influence of the presence or absence of an unbreathable intermediate membrane layer in the sound insulation material 6B on the sound absorption characteristics.
[FIG. 21] FIG. 21 is a graph illustrating the sound absorption characteristics of each of samples of the sound insulation material 6C including elastomeric foam chips.
[FIG. 22] FIG. 22 is a graph illustrating the transmission loss of each of the samples of the sound insulation material 6C including elastomeric foam chips.
[FIG. 23] FIG. 23 is a graph illustrating the sound absorption characteristics of each of samples of the sound insulation material 6C including PE chips.
[FIG. 24] FIG. 24 is a graph illustrating the transmission loss of each of the samples of the sound insulation material 6C including PE chips.
[FIG. 25] FIG. 25 is a graph illustrating the sound absorption characteristics of each of samples of the sound insulation material 6C including mixed chips.
[FIG. 26] FIG. 26 is a graph illustrating the transmission loss of each of the samples of the sound insulation material 6C including mixed chips.
[FIG. 27] FIG. 27 is a graph illustrating the sound absorption characteristics of each of samples of the sound insulation material 6D.
[FIG. 28] FIG. 28 is a graph illustrating the sound absorption characteristics of each of other samples of the sound insulation material 6D.
[FIG. 29] FIG. 29 is a graph illustrating the sound absorption characteristics of each of conventional fibrous sound absorbing materials.
[FIG. 30] FIG. 30 is a graph illustrating the normal incidence sound absorption coefficient of each of a sound absorbing material made of only felt and a sound absorbing material including the felt and nonwoven fabric stacked on the felt.

### DESCRIPTION OF EMBODIMENTS

Embodiments of the present disclosure will be described hereinafter with reference to the drawings. The following preferred embodiments are set forth merely for the purposes of examples in nature, and are not intended to limit the scope, applications, and use of the invention.

### <Example Motor Vehicle In Which Sound Insulation Material Is Used>

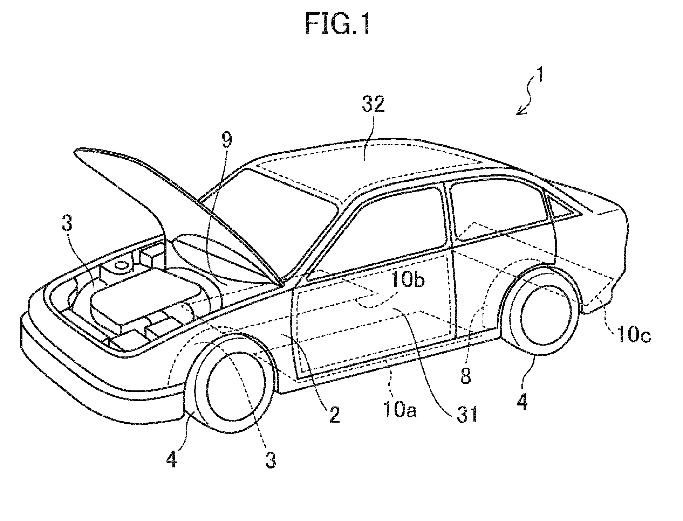

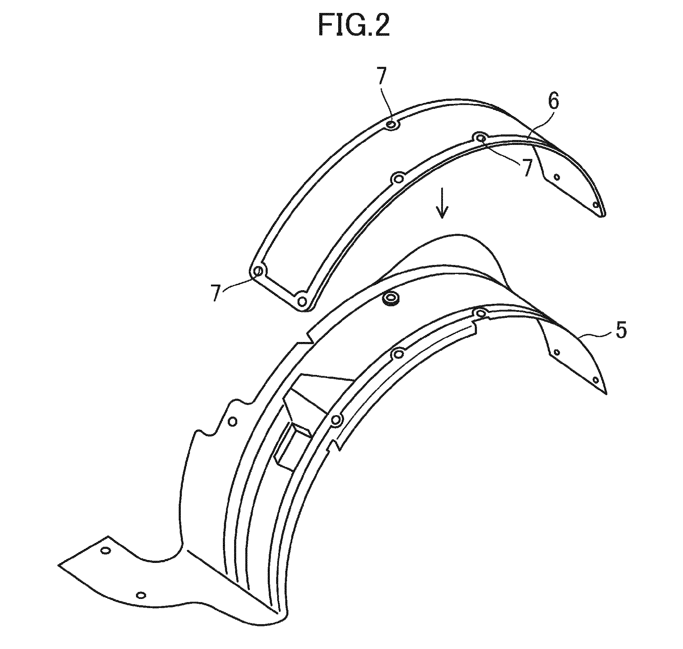

FIG. 1 illustrates a motor vehicle 1 that is an example vehicle in which a sound insulation material according to the present disclosure is used. In this figure, the reference numeral 2 denotes a front fender, and an inner fender 5 illustrated in FIG. 2 is provided, as a lining, inside a wheel well 3 of the front fender 2 (toward a corresponding one of tires 4). The inner fender 5 prevents flaws and rust in/on the inner surface of the front fender 2 and noise all arising from, e.g., small stones bounced off by the tire 4, or water splashed by the tire 4. As illustrated in FIG. 2, the sound insulation material 6 is placed on the upper surface of the inner fender 5 (opposite to the tire 4) to block road noise and other noises. The sound insulation material 6 has weep holes 7. The sound insulation material 6 can be placed also on another portion of a vehicle body, such as an inner fender 8 placed on a rear fender, a dash panel 9, the upper surfaces of under-floor covers 10a-10c, side doors 31, or a roof 32 to allow the interior of the motor vehicle to be quiet.

The weep holes 7 may be attachment holes used to attach the sound insulation material 6 to the inner fender 5. As described below, a peripheral portion of the sound insulation material 6 forms a junction, and the junction can be fixed to the inner fender 5 by bonding part of the junction or the entire junction to the inner fender 5 (fusion using an adhesive or the material of the junction) or with a fastener, such as a stapler or a bolt.

### <Sound Insulation Material>

### (Sound Insulation Material 6A Without Intermediate Membrane Layer)

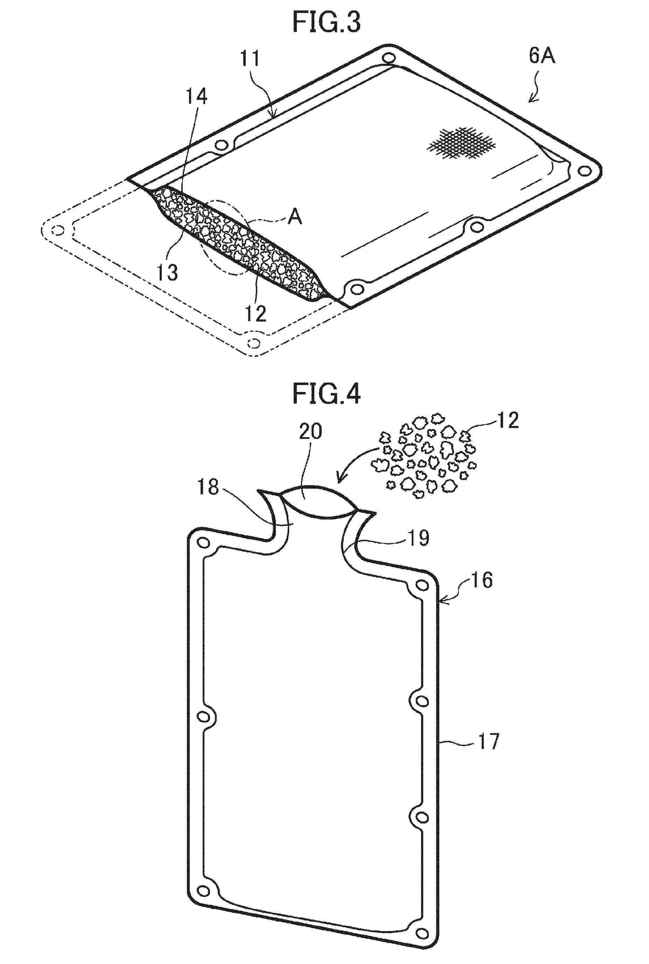

As illustrated in FIG. 3, a sound insulation material 6A according to this embodiment includes a flat bag 11, and chips 12 enclosed in the flat bag 11. The flat bag 11 is closed along the entire perimeter thereof. The flat bag 11 will be specifically described below.

The flat bag 11 is formed by joining peripheral portions of two breathable nonwoven fabric sheets 13, 14 along the entire perimeters thereof Examples of a material of the nonwoven fabric sheets 13, 14 include, but not specifically limited to, artificial fibers of polyethylene (PE) and polyethylene terephthalate (PET). For example, heat sealing is used to bond the peripheral portions of the nonwoven fabric sheets 13, 14 together. The individual chips 12 are not bonded together, and can move. The chips 12 are not bonded also to the flat bag 11.

FIG. 4 illustrates a flat bag material 16 in which the chips 12 have not been enclosed yet. The flat bag material 16 includes a body portion 17, a chip feeding portion 18, and a neck portion 19, and the chip feeding portion 18 is connected through the neck portion 19 to the body portion 17. A chip feeding opening 20 is formed in the chip feeding portion 18. The chips 12 are charged through the chip feeding opening 20 of the chip feeding portion 18 into the body portion 17 of the flat bag material 16. The neck portion 19 of the flat bag material 16 into which the chips 12 have been charged is sealed by heat sealing. The chip feeding portion 18 is separated from the body portion 17 into which the chips 12 have been charged by cutting, thereby obtaining the sound insulation material 6A. The body portion 17 of the flat bag material 16 serves as the flat bag 11.

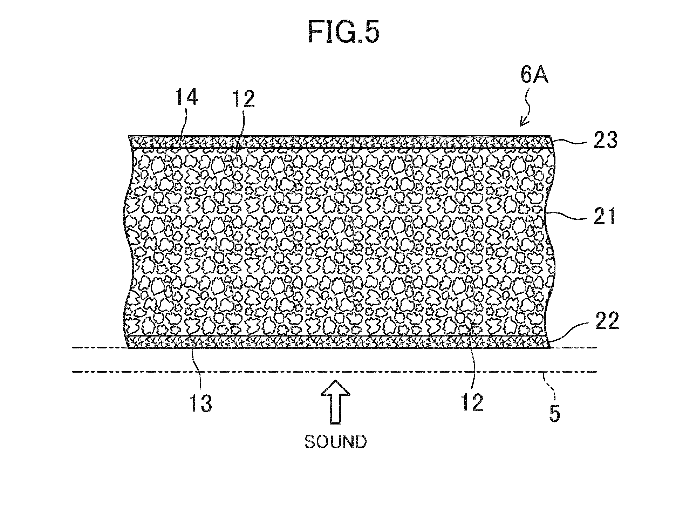

As illustrated in FIG. 5, in the sound insulation material 6A, the many chips 12 interposed between the nonwoven fabric sheets 13 and 14 of the flat bag 11 form a chip layer 21. In this example, sound enters the sound insulation material 6A upward in this figure, and the nonwoven fabric sheet 13 forms a surface of the sound insulation material 6A through which target sound to be absorbed enters the chip layer 21, i.e., an entry-side coat 22. The nonwoven fabric sheet 14 covers a surface of the chip layer 21 opposite to the surface thereof through which the target sound enters the chip layer 21, and forms a back-surface-side coat 23. The entry-side coat 22 and the back-surface-side coat 23 are not bonded to the chip layer 21.

The sound insulation material 6A is placed over the inner fender 5 such that, for example, as illustrated in FIG. 2, its entry-side coat 22 is in contact with the upper surface of the inner fender 5. The inner fender 5 is indicated by the chain double-dashed line in FIG. 5, and the entry-side coat 22 and the inner fender 5 are not bonded together. A gap may be formed between the back-surface-side coat 23 and the wheel well 3 of the front fender 2. As described above, a joint of a peripheral portion of the sound insulation material 6A is fixed to the inner fender 5. In this example, the joint of the peripheral portion of the sound insulation material 6A is partially fixed to the inner fender 5 by heat sealing.

In the sound insulation material 6A of this embodiment, the airflow resistance of the chip layer 21 along the thickness thereof is on the order of 10³ Ns/m⁴, and the airflow resistance of each of the entry-side coat 22 and the back-surface-side coat 23 along the thickness thereof is in the range from on the order of 10⁵ Ns/m⁴ to on the order of 10⁸ Ns/m⁴. When the chips 12 are elastomeric foam chips, the average particle size of the chips 12 is greater than or equal to 0.5 mm and equal to or less than 5 mm. The largest sizes of the individual particles are distributed within the range of about 0.1-10 mm. The foam density of each of the chips 12 is greater than or equal to 0.01 g/cm³ and equal to or less than 0.99 g/cm³. The thickness of the chip layer 21 is greater than or equal to 5 mm and equal to or less than 100 mm, and can be greater than 100 mm. The thickness of each of the entry-side coat 22 and the back-surface-side coat 23 is greater than or equal to 0.2 mm and equal to or less than 3 mm.

### (Sound Insulation Material 6B Including Chip Layer Having One Surface Covered With Unbreathable Coating Layer)

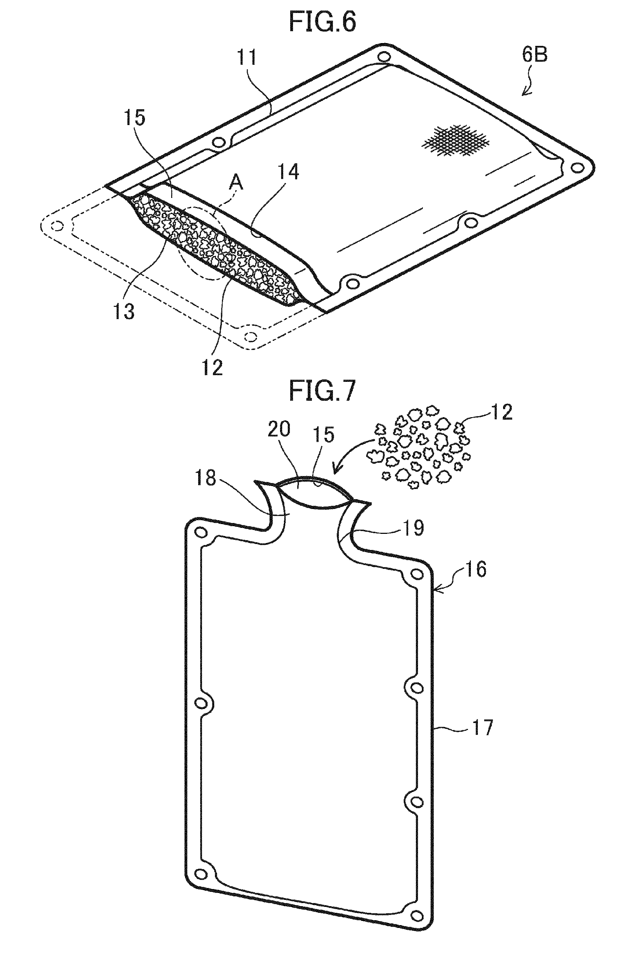

A sound insulation material 6B illustrated in FIG. 6 is a sound insulation material including a chip layer having one surface covered with an unbreathable coat. A flat bag 11 of the sound insulation material 6B includes two breathable nonwoven fabric sheets 13, 14 forming both surfaces of the bag, and an unbreathable sheet 15 inside the bag. Examples of a material of the nonwoven fabric sheets 13, 14 include, but not specifically limited to, artificial fibers of PE and PET similarly to those of the sound insulation material 6A, and the unbreathable sheet 15 is made of polyethylene (PE). Outer portions of the nonwoven fabric sheets 13, 14 and the unbreathable sheet 15 are joined together along the entire perimeters thereof, and for example, heat sealing is used to join them together. Chips 12 are charged between the nonwoven fabric sheet 13 and the unbreathable sheet 15. The individual chips 12 are not bonded together, and can move. The chips 12 are not bonded also to the nonwoven fabric sheet 13 and the unbreathable sheet 15. The nonwoven fabric sheet 14 and the unbreathable sheet 15 are not bonded together inside the flat bag 11.

FIG. 7 illustrates a flat bag material 16 in which the chips 12 have not been enclosed yet. The flat bag material 16 includes a body portion 17, a chip feeding portion 18, and a neck portion 19, and the chip feeding portion 18 is connected through the neck portion 19 to the body portion 17. A chip feeding opening 20 is formed in the chip feeding portion 18. The unbreathable sheet 15 is provided inside the flat bag material 16. The chips 12 are charged through the chip feeding opening 20 of the chip feeding portion 18 between a portion of the nonwoven fabric sheet 13 corresponding to the body portion 17 and a portion of the unbreathable sheet 15 corresponding thereto. The neck portion 19 of the flat bag material 16 into which the chips 12 have been charged is sealed by heat sealing. The chip feeding portion 18 is separated from the body portion 17 into which the chips 12 have been charged by cutting, thereby obtaining the sound insulation material 6B. The body portion 17 of the flat bag material 16 serves as the flat bag 11.

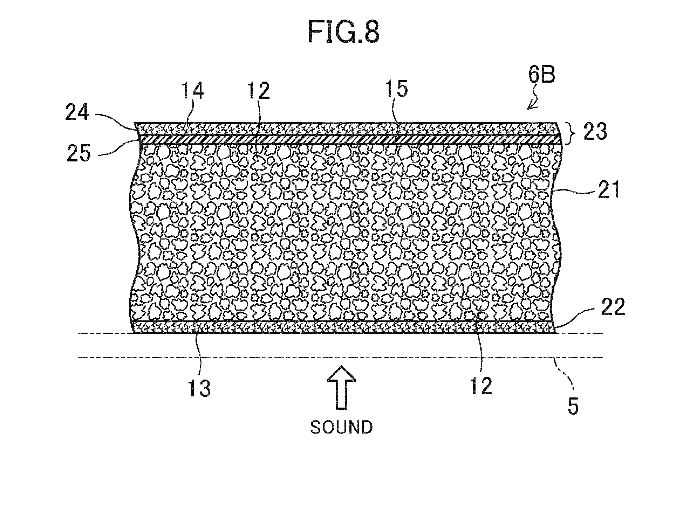

As illustrated in FIG. 8, in the sound insulation material 6B, the many chips 12 interposed between the nonwoven fabric sheet 13 and the unbreathable sheet 15 of the flat bag 11 form a chip layer 21. In this example, sound enters the sound insulation material 6B upward in this figure, and the nonwoven fabric sheet 13 forms a surface of the sound insulation material 6B which is located outwardly of the motor vehicle and through which target sound to be absorbed enters the chip layer 21, i.e., an entry-side coat 22. The nonwoven fabric sheet 14 and the unbreathable sheet 15 covers a surface of the chip layer 21 located inwardly of the motor vehicle and being opposite to the surface thereof through which the target sound enters the chip layer 21, and forms a back-surface-side coat 23. In the back-surface-side coat 23, the nonwoven fabric sheet 14 forms a breathable coat 24, and the unbreathable sheet 15 forms an unbreathable coat 25. As such, the back-surface-side coat 23 has a two-layer structure of the breathable coat 24 and the unbreathable coat 25, and enhances the effectiveness of sound absorption or sound insulation. Although not shown, the breathable coat 24 and the unbreathable coat 25 may be separated from each other to form an airspace therebetween. The entry-side coat 22 and the back-surface-side coat 23 are not bonded to the chip layer 21.

Similarly to the previously described sound insulation material 6A, the sound insulation material 6B is also placed over the inner fender 5 such that, for example, as illustrated in FIG. 2, its entry-side coat 22 is in contact with the upper surface of the inner fender 5. The sound insulation material 6B may be provided such that the coat 23 including the unbreathable coat 25 is in contact with the upper surface of the inner fender 5.

In the sound insulation material 6B of this embodiment, the airflow resistance of the chip layer 21 along the thickness thereof is on the order of 10³ Ns/m⁴. The airflow resistance of each of the entry-side coat 22 and the breathable coat 24 near the back surface of the sound insulation material 6B along the thickness thereof is in the range from on the order of 10⁵ Ns/m⁴ to on the order of 10⁸ Ns/m⁴. The airflow resistance of the unbreathable coat 25 near the back surface of the sound insulation material 6B along the thickness thereof is greater than or equal to 1 × 10⁹ Ns/m⁴ (unbreathable). When the chips 12 are elastomeric foam chips, the average particle size of the chips 12 is greater than or equal to 0.5 mm and equal to or less than 5 mm. The largest sizes of the individual particles are distributed within the range of about 0.1-10 mm. The foam density of each of the chips 12 is greater than or equal to 0.01 g/cm³ and equal to or less than 0.99 g/cm³. The thickness of the chip layer 21 is greater than or equal to 5 mm and equal to or less than 100 mm, and can be greater than 100 mm. The thickness of each of the entry-side coat 22 and the breathable coat 24 near the back surface of the sound insulation material 6B is greater than or equal to 0.01 mm and equal to or less than 3 mm. The thickness of the unbreathable coat 25 is greater than or equal to 0.01 mm and equal to or less than 0.5 mm.

### (Sound Insulation Material 6C Including Intermediate Membrane Layer)

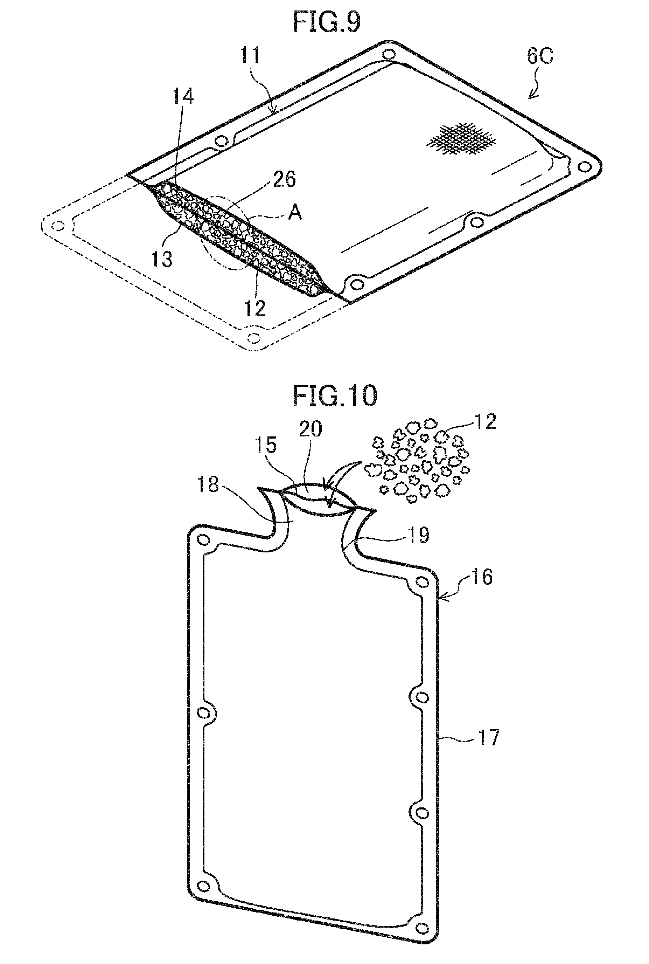

A sound insulation material 6C illustrated in FIG. 9 is a sound insulation material including an intermediate membrane layer. A flat bag 11 of the sound insulation material 6C includes two breathable nonwoven fabric sheets 13, 14 forming both surfaces of the bag, and an unbreathable membrane 26 inside the bag. Examples of a material of the nonwoven fabric sheets 13, 14 include, but not specifically limited to, artificial fibers of PE and PET similarly to those of the sound insulation material 6A, and the unbreathable membrane 26 is made of PE. Outer portions of the nonwoven fabric sheets 13, 14 and the membrane 26 are joined together along the entire perimeters thereof, and for example, heat sealing is used to join them together. The unbreathable membrane 26 partitions the interior of the flat bag 11 into a space near one of the surfaces of the bag and a space opposite to the space near the one of the surfaces. The chips 12 are charged into each of the spaces. The individual chips 12 are not bonded together, and can move. The chips 12 are not bonded also to the nonwoven fabric sheets 13, 14 and the membrane 26.

FIG. 10 illustrates a flat bag material 16 in which the chips 12 have not been enclosed yet. The flat bag material 16 includes a body portion 17, a chip feeding portion 18, and a neck portion 19, and the chip feeding portion 18 is connected through the neck portion 19 to the body portion 17. A chip feeding opening 20 is formed in the chip feeding portion 18. The unbreathable membrane 26 partitions the interior of the flat bag 11 into the space near the one of the surfaces of the bag and the space opposite to the space near the one of the surfaces. The chips 12 are charged through the chip feeding opening 20 of the chip feeding portion 18 into both of the spaces separated by a portion of the unbreathable membrane 26 corresponding to the body portion 17. The neck portion 19 of the flat bag material 16 into which the chips 12 have been charged is sealed by, for example, heat sealing. The chip feeding portion 18 is separated from the body portion 17 into which the chips 12 have been charged by cutting, thereby obtaining the sound insulation material 6C. The body portion 17 of the flat bag material 16 serves as the flat bag 11.

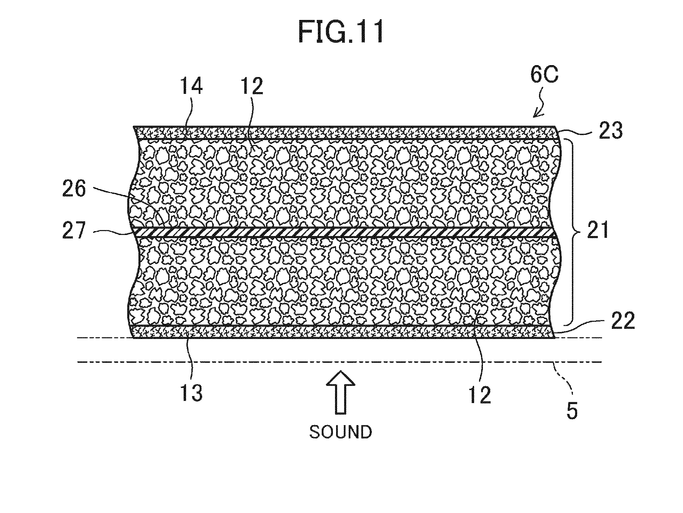

As illustrated in FIG. 11, in the sound insulation material 6C, the many chips 12 interposed between the nonwoven fabric sheets 13 and 14 of the flat bag 11 form a chip layer 21. In this example, sound enters the sound insulation material 6C upward in this figure, and the nonwoven fabric sheet 13 forms a surface of the sound insulation material 6C through which target sound to be insulated enters the chip layer 21, i.e., an entry-side coat 22. The nonwoven fabric sheet 14 covers a surface of the chip layer 21 opposite to the surface thereof through which the target sound enters the chip layer 21, and forms a back-surface-side coat 23. The membrane 26 of the flat bag 11 forms an unbreathable intermediate membrane layer 27 dividing the chip layer 21 into a plurality of layers. The entry-side coat 22 and the back-surface-side coat 23 are not bonded to the chip layer 21.

Similarly to the previously described sound insulation material 6A, the sound insulation material 6C is also placed over the inner fender 5 such that, for example, as illustrated in FIG. 2, its entry-side coat 22 is in contact with the upper surface of the inner fender 5.

In the sound insulation material 6C of this embodiment, the airflow resistance of the chip layer 21 along the thickness thereof is on the order of 10³ Ns/m⁴. The airflow resistance of each of the entry-side coat 22 and the back-surface-side coat 23 along the thickness thereof is in the range from on the order of 10⁵ Ns/m⁴ to on the order of 10⁸ Ns/m⁴. The airflow resistance of the intermediate membrane layer 27 is greater than or equal to 1 × 10⁹ Ns/m⁴ (unbreathable). When the chips 12 are elastomeric foam chips, the average particle size of the chips 12 is greater than or equal to 0.5 mm and equal to or less than 5 mm. The largest sizes of the individual particles are distributed within the range of about 0.1-10 mm. The foam density of each of the chips 12 is greater than or equal to 0.01 g/cm³ and equal to or less than 0.99 g/cm³. The thickness of the chip layer 21 is greater than or equal to 5 mm and equal to or less than 100 mm, and can be greater than 100 mm. The thickness of each of the entry-side coat 22 and the back-surface-side coat 23 is greater than or equal to 0.2 mm and equal to or less than 3 mm. The thickness of the intermediate membrane layer 27 is greater than or equal to 0.01 mm and equal to or less than 0.5 mm.

### (Sound Insulation Material 6D In Which Intermediate Membrane Layer And One of Coating Layers Covering Chip Layer Are Unbreathable)

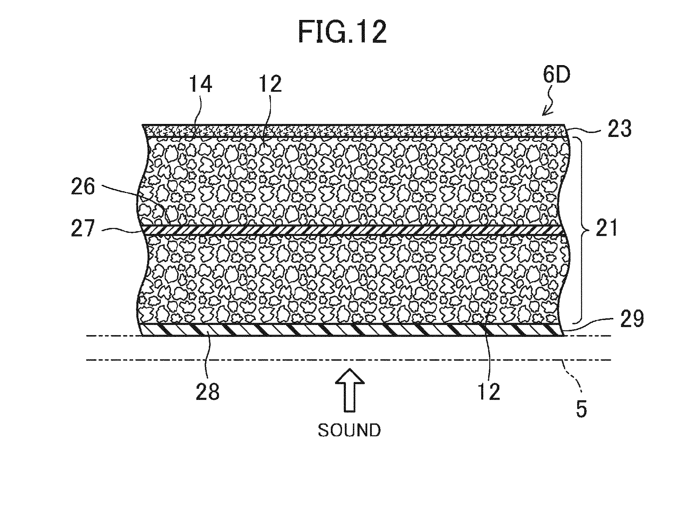

A sound insulation material 6D illustrated in FIG. 12 is a sound insulation material in which an intermediate membrane layer 27 and one of coats covering a chip layer 21, i.e., a coat 29, are unbreathable. The coat 29 covering the chip layer 21 is an unbreathable sheet 28, and the other one of the coats covering the chip layer 21, i.e., a coat 23, is a nonwoven fabric sheet 14. The other configurations of the sound insulation material 6D are identical with those of the sound insulation material 6C. Examples of a material of the nonwoven fabric sheet 14 include, but not specifically limited to, artificial fibers of PE and PET, and the unbreathable sheet 28 and a membrane 26 forming the intermediate membrane layer 27 are made of PE.

In the example illustrated in FIG. 12, sound enters the sound insulation material 6D upward (from the outside of the vehicle toward the inside thereof) in this figure, and the coat 29 and the other coat 23 form an entry-side coat and a back-surface-side coat, respectively. If target sound enters the sound insulation material 6D downward (from the inside of the vehicle toward the outside thereof), the unbreathable entry-side coat 29 may be located in the upper portion of the figure, and the nonwoven fabric sheet 14 covering a surface of the chip layer 21 opposite to a surface thereof through which sound enters the sound insulation material 6D may be located in the lower portion of the figure.

The other coat 23 may be made of an unbreathable material, such as a polyethylene sheet. This allows the coat 23 to insulate sound, and thus enhances the sound insulation performance of the sound insulation material. The coat 23 has waterproofness, and thus prevents water from penetrating the chip layer 21. Thus, such a coat 23 is effective in maintaining the sound insulation performance and improving the durability of the sound insulation material when the sound insulation material is used in an inner fender over which water tends to be splashed by a tire.

### <Dynamic Longitudinal Elastic Modulus And Loss Factor of Chip Layer>

Elastomeric foam chips and PE chips were prepared as chips. The elastomeric foam chips were obtained by pulverizing scraps of a sound insulating sheet made of, e.g., an EPDM rubber foam (sponge material) into chips. The PE chips were obtained by pulverizing a polyethylene sheet into flakes. The dynamic longitudinal elastic modulus and loss factor of each of uncompressed chip layers were measured. The uncompressed chip layers include an uncompressed chip layer containing only elastomeric foam chips stacked to a thickness of 40 mm, an uncompressed chip layer containing only PE chips stacked to a thickness of 40 mm, and an uncompressed chip layer containing mixed chips obtained by mixing elastomeric foam chips and PE chips in a mass ratio of 1:1 and stacked to a thickness of 40 mm.

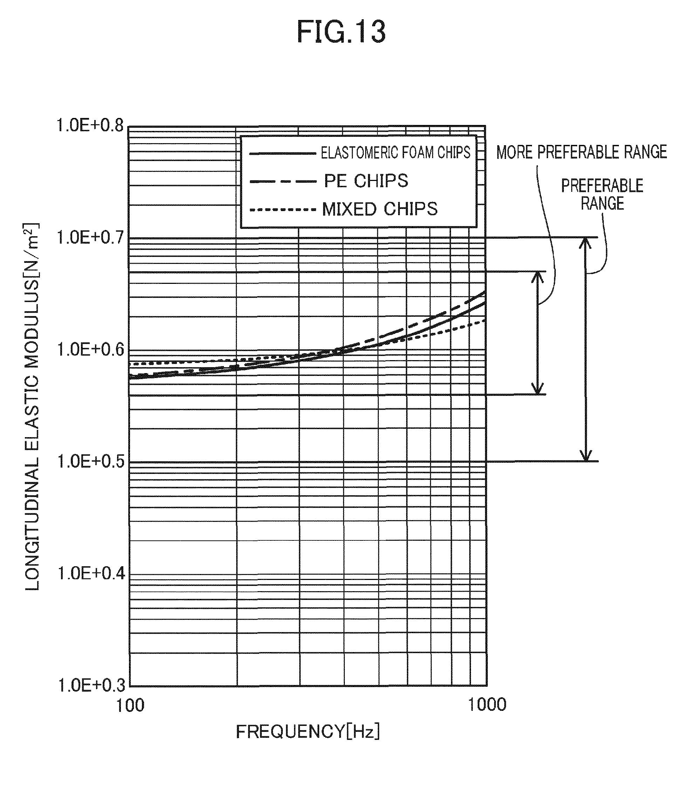

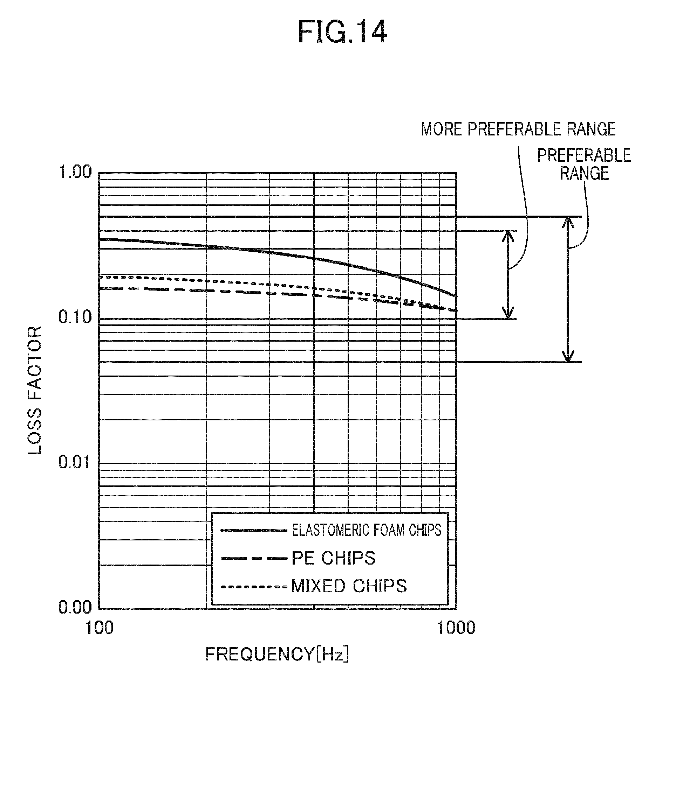

The measurements were made using an exciter that repeats compression and compression release of each of the uncompressed chip layers along the thickness thereof, and the dynamic longitudinal elastic modulus thereof was measured by a resonance method. The loss factor thereof was calculated by a half-power bandwidth method with respect to the resonance point of the uncompressed chip layer. FIGS. 13 and 14 illustrate the measurement results.

As illustrated in FIG. 13, the dynamic longitudinal elastic modulus of each of the chip layer containing elastomeric foam chips, the chip layer containing PE chips, and the chip layer containing mixed chips within the range from 100 Hz to 1000 Hz is greater than or equal to 1 × 10⁵ N/m² and equal to or less than 1 × 10⁷ N/m², and is strictly greater than or equal to 4 × 10⁵ N/m² and equal to or less than 5 × 10⁶ N/m².

As illustrated in FIG. 14, the loss factor of each of the chip layer containing elastomeric foam chips, the chip layer containing PE chips, and the chip layer containing mixed chips within the range from 100 Hz to 1000 Hz is greater than or equal to 0.05 and equal to or less than 0.5, and is strictly greater than or equal to 0.1 and equal to or less than 0.4.

### <First Evaluation of Characteristics of Sound Insulation Material 6A>

### -Samples-

Sound insulation material samples A-D (without an intermediate membrane layer) each having a two-layer structure of a chip layer and an entry-side coat, and a sound insulation material sample E (without an intermediate membrane layer) including only a chip layer were prepared. The airflow resistances of the entry-side coats of the samples A-D are different from one another. No back-surface-side coat is provided.

The above-described elastomeric foam chips (chips of an EPDM rubber foam (sponge material)) were used as chips forming the chip layer of each of the samples A-E. The average particle size of the elastomeric foam chips is about 2 mm, and the foam density thereof is about 0.3 g/cm³. The dynamic longitudinal elastic modulus and loss factor of the chip layer are each within the corresponding preferable range. The chip layer has a thickness of 45 mm, a surface density of 2.5 kg/m², and an airflow resistance of the order of 10³ Ns/m⁴ along the thickness thereof. The airflow resistance was measured in a situation where the elastomeric foam chips are stacked to a thickness of 45 mm and are uncompressed. The airflow resistance according to the present disclosure was measured by a DC method in conformity with the ISO 9053 standard.

As illustrated in Table 1, the entry-side coats of the samples A-C were made of nonwoven fabric sheets with different airflow resistances. The entry-side coat of the sample D was made of a 0.08-mm-thick unbreathable polyethylene sheet having an airflow resistance of greater than or equal to 1 × 10⁹ Ns/m⁴. The entry-side coats of the samples A-C each have a thickness of 0.5 mm and a surface density of about 100 g/m². The term "unbreathable" herein means that a material has an airflow resistance of greater than or equal to 1 × 10⁹ Ns/m⁴.

**[Table 1]**

| Sound Absorbing Material | Airflow Resistance of Chip Layer | Entry-Side Coating Layer | |
|---|---|---|---|
| | | Material | Airflow Resistance |
| Sample A | Order of 10³ Ns/m⁴ | Nonwoven Fabric | 4.1 × 10⁵ Ns/m⁴ |
| Sample B | Order of 10³ Ns/m⁴ | Nonwoven Fabric | 2.8 × 10⁶ Ns/m⁴ |
| Sample C | Order of 10³ Ns/m⁴ | Nonwoven Fabric | 4.2 × 10⁸ Ns/m⁴ |
| Sample D | Order of 10³ Ns/m⁴ | Polyethylene Sheet | 1 × 10⁹ Ns/m⁴ or more |
| Sample E | Order of 10³ Ns/m⁴ | | |

### -Characteristics Evaluation-

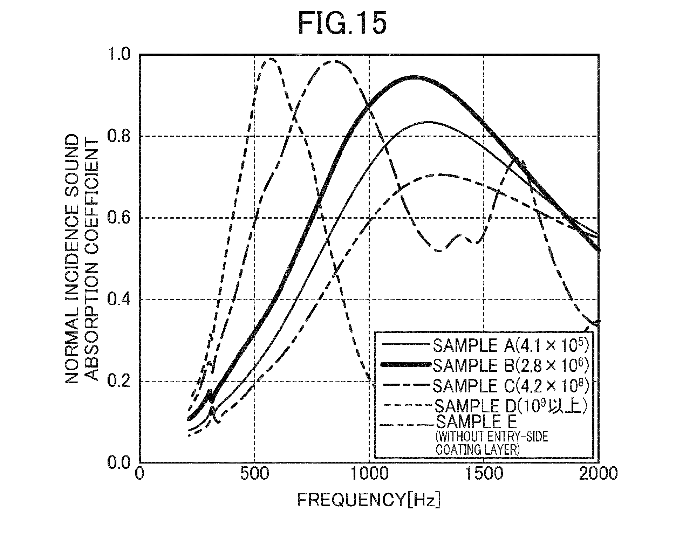

The normal incidence sound absorption coefficient of each of the uncompressed samples A-E was measured in conformity with the JIS A 1405-2 standard. FIG. 15 illustrates the measurement results. The numeric value following the character used to identify each of the samples represents the airflow resistance of an entry-side coat of the sample (unit: Ns/m⁴).

The sample E including only a chip layer exhibits sound absorption characteristics where the sound absorption coefficient reaches its peak at about 1250 Hz. In contrast, the frequency of target sound to be absorbed at the peak of the sound absorption coefficient of the sample A including the entry-side coat made of nonwoven fabric having an airflow resistance of 4.1 × 10⁵ Ns/m⁴ is slightly shifted toward lower frequencies than the frequency at the peak of the sound absorption coefficient of the sample E without an entry-side coat, and the sound absorption coefficient of the sample A is higher within the wide frequency range from 200 Hz to 2000 Hz than that of the sample E. While the sound absorption coefficient of the sample B including the entry-side coat made of nonwoven fabric having an airflow resistance of 2.8 × 10⁶ Ns/m⁴ is slightly lower at about 2000 Hz than that of the sample A, the frequency at the peak of the sound absorption coefficient of the sample B is further shifted toward lower frequencies than the frequency at the peak of the sound absorption coefficient of the sample A, and the sound absorption coefficient of the sample B is higher within the wide frequency range from 200 Hz to 1800 Hz than that of the sample A.

While the peak of the sound absorption coefficient of the sample C including the entry-side coat made of nonwoven fabric having an airflow resistance of 4.2 × 10⁸ Ns/m⁴ is higher, the amount by which the frequency at the peak of the sound absorption coefficient of the sample C is shifted toward lower frequencies than the frequency at the peak of the sound absorption coefficient of the sample B increases, and the sound absorption coefficient decreases in the range from about 1200 Hz to about 1500 Hz. However, the amount of reduction in sound absorption coefficient is not so large in the range from about 1200 Hz to about 1500 Hz. Thus, it can be said that high sound absorption coefficients are obtained in a wide frequency range as a whole.

The amount by which the frequency at the peak of the sound absorption coefficient of the sample D including the entry-side coat made of an unbreathable polyethylene sheet is shifted toward lower frequencies than the frequency at the peak of the sound absorption coefficient of the sample B is large, and the sound absorption coefficient thereof drops sharply in the range of frequencies greater than or equal to 800 Hz

Comparison between the sound absorption characteristics of the sample B and those of the sample C in FIG. 15 can show that even when the airflow resistance of the entry-side coat is set at on the order of 10⁷ Ns/m⁴, high sound absorption coefficients are obtained in a wide frequency range.

### <Second Evaluation of Characteristics of Sound Insulation Material 6A>

### -Sample-

A sound insulation material sample F (without an intermediate membrane layer) was prepared which has a three-layer structure of a chip layer, an entry-side coat, and a back-surface-side coat. Elastomeric foam chips (chips of an EPDM rubber foam (sponge material)) made of the same material as the material of those in the previously described first evaluation of the characteristics of the sound insulation material 6A were used as a material of the chip layer. The chip layer has a thickness of 40 mm, a surface density of 2.0 kg/m², and an airflow resistance of 1 × 10³ Ns/m⁴ along the thickness thereof in its uncompressed state. Nonwoven fabric having an airflow resistance of 2.8 × 10⁶ Ns/m⁴ and a thickness of 0.5 mm was used as a material of each of the entry-side coat and the back-surface-side coat similarly to that of the entry-side coat of the previously described sample B.

### -Characteristics Evaluation-

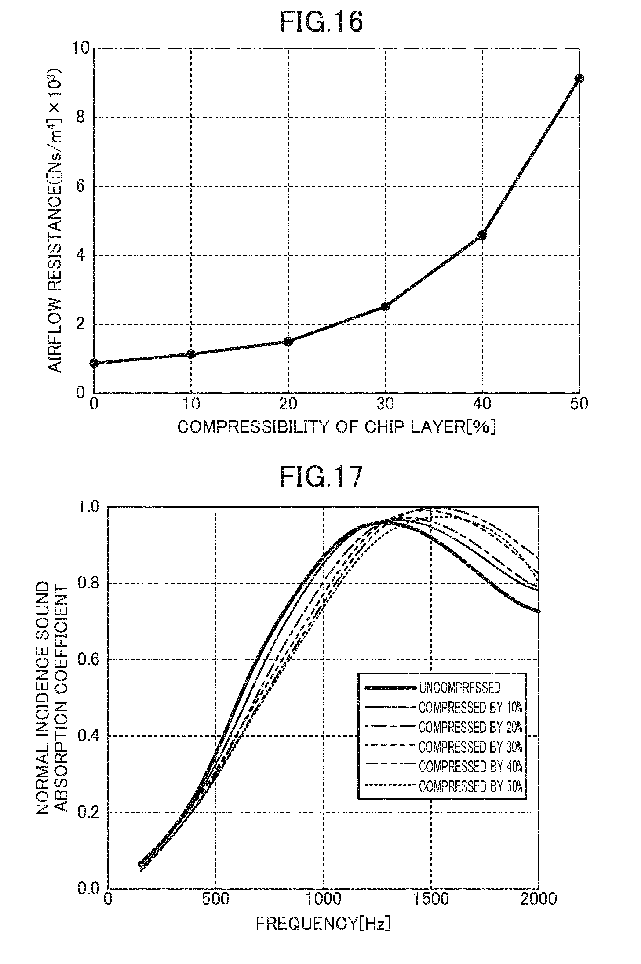

The chip layer was compressed by 10%-50% in steps of 10%, and the airflow resistance of the compressed chip layer along the thickness thereof in each of the steps was measured. FIG. 16 illustrates the measurement results. With increasing compressibility, the airflow resistance increases, whereas even when the chip layer was compressed by 50%, the airflow resistance is 9 × 10³ Ns/m⁴, i.e., on the order of 10³ Ns/m⁴.

Next, the chip layer of the sound insulation material sample F having the three-layer structure was compressed by 10%-50% in steps of 10%, and the normal incidence sound absorption coefficient of the uncompressed sound insulation material sample F, and the normal incidence sound absorption coefficient of the compressed sound insulation material sample F in each of the steps were measured in a manner identical to that in the previously described first characteristics evaluation. FIG. 17 illustrates the measurement results.

FIGS. 15 and 17 show that the sound absorption coefficient of the uncompressed sound insulation material sample F is higher than that of the previously described sample B in the range of 500-2000 Hz. This shows that the difference in surface density between the chip layers and the presence or absence of the back-surface-side coat affect the sound absorption coefficient.

As seen from FIG. 17, with increasing compressibility of the chip layer (with increasing airflow resistance), the amount by which the frequency at the peak of the sound absorption coefficient is shifted toward higher frequencies tends to increase. However, the amount of reduction in sound absorption coefficient at lower frequencies due to such a shift is small, and high sound absorption performance is obtained in a wide frequency range similarly to the case of the uncompressed sample.

Specifically, as long as the airflow resistance of the chip layer is on the order of 10³ Ns/m⁴, even if the airflow resistance increases within the range of on the order, the frequency at the peak of the sound absorption coefficient is merely shifted toward higher frequencies to some extent. Thus, it can be said that high sound absorption performance is obtained in a wide frequency range.

### <First Evaluation of Characteristics of Sound Insulation Material 6B>

### -Sample G-

A sound insulation material sample G was prepared which includes a chip layer having one surface covered with nonwoven fabric serving as a breathable coat and the other surface covered with nonwoven fabric serving as a breathable coat and a polyethylene sheet serving as an unbreathable coat. The nonwoven fabric and the polyethylene sheet over the other surface were placed one over the other such that the polyethylene sheet is located inwardly of the nonwoven fabric.

The same elastomeric foam chips (chips of an EPDM rubber foam (sponge material)) as those in the previously described first evaluation of the characteristics of the sound insulation material 6A were used as a material of the chip layer. The surface density of the chip layer is 2.5 kg/m², and the airflow resistance of the uncompressed chip layer along the thickness thereof is 2 × 10³ Ns/m⁴. The nonwoven fabric has a thickness of 0.55 mm and an airflow resistance of 4.0 × 10⁵ Ns/m⁴. The polyethylene sheet has a thickness of 0.08 mm and an airflow resistance of greater than or equal to 1 × 10⁹ Ns/m⁴.

### -Samples H, I-

A sound insulation material sample H and a sound insulation material sample I were prepared. The PE chips were used as chips of the sound insulation material sample H, and the sound insulation material sample H otherwise has the same configuration as the sample G. The mixed chips (obtained by mixing elastomeric foam chips and PE chips in a mass ratio of 1:1) were used as chips of the sound insulation material sample I, and the sound insulation material sample I otherwise has the same configuration as the sample G. The surface density of the chip layer including the PE chips and the surface density of the chip layer including the mixed chips are both 2.5 kg/m².

### -Sample J-

A sound insulation material sample J (without an unbreathable coat) including a chip layer having both surfaces covered with nonwoven fabric was prepared. The material of chips, and the surface density and airflow resistance of the chip layer are respectively the same as the chip material and the surface density and airflow resistance of the sample G, and the nonwoven fabric is the same as that of the sample G.

### -Characteristics Evaluation-

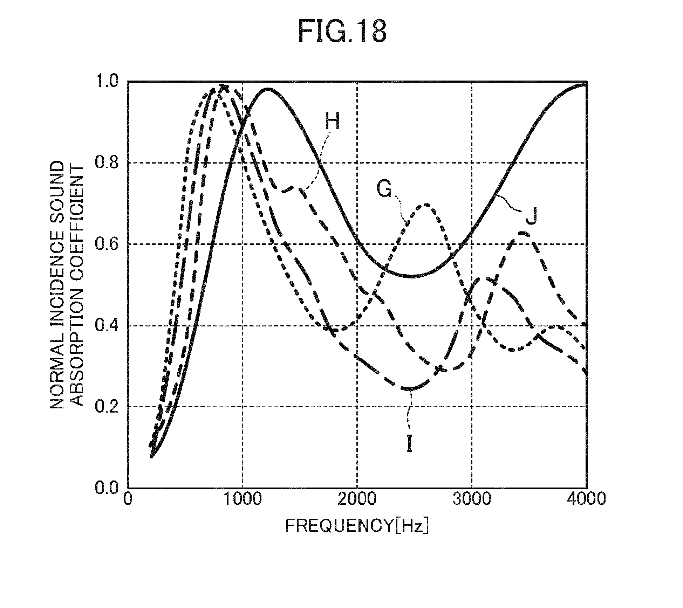

The normal incidence sound absorption coefficients of the uncompressed samples G-J were measured in a manner identical to that in each of the previous cases. Note that the measurements on the samples G-I each including a polyethylene sheet were made in a situation where sound entered each sample through one of the surfaces of the sample near the nonwoven fabric and the polyethylene sheet placed one over the other, and the other nonwoven fabric was removed. The measurement on the sample J that does not include a polyethylene sheet was made in a situation where sound entered the sample J through one of the surfaces of the sample J each including the nonwoven fabric, and the nonwoven fabric covering the other one thereof was removed. FIG. 18 illustrates the measurement results. FIG. 18 shows that the frequency at the peak of the sound absorption coefficient of each of the samples G-I including the unbreathable coat is shifted toward lower frequencies than the frequency at the peak of the sound absorption coefficient of the sample J without the unbreathable coat, and the sound absorption performance of the sample in the range of 500-1000 Hz is, therefore, high. Furthermore, it can be seen that the samples G, H, and I have similar sound absorption characteristics.

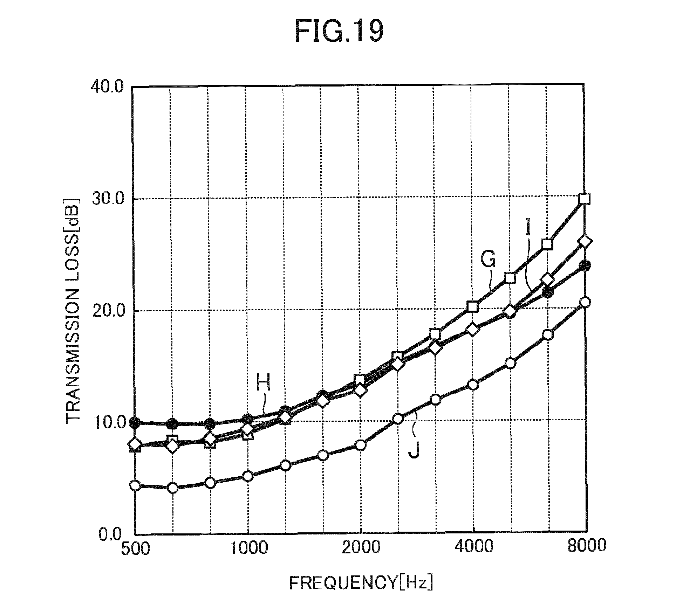

The transmission loss of each of the uncompressed samples G-J was measured. Note that unlike the measurements of the normal incidence sound absorption coefficients, sound entered the sample through one of the surfaces of the sample including only the nonwoven fabric instead of through the other one of the surfaces of the sample including the nonwoven fabric and the polyethylene sheet placed one over the other. FIG. 19 illustrates the measurement results. FIG. 19 shows that the unbreathable coat increases the transmission loss, and increases the sound insulation performance.

FIGS. 18 and 19 show that while the sound absorption characteristics and the sound insulation characteristics slightly vary depending on the type of chips (elastomeric foam chips, PE chips, and mixed chips), there are little differences in characteristics among the chip types, and when either one of the chip types is selected, good sound absorption characteristics and good sound insulation characteristics are obtained.

### <First Evaluation of Characteristics of Sound Insulation Material 6C>

### -Sample-

A sound insulation material sample K was prepared which has a four-layer structure of a chip layer, an entry-side coat, a back-surface-side coat, and an intermediate membrane layer. The intermediate membrane layer of the sound insulation material sample K was located in a central portion of the chip layer in a thickness direction thereof.

The same elastomeric foam chips (chips of an EPDM rubber foam (sponge material)) as those in the previously described first evaluation of the characteristics of the sound insulation material 6A were used as a material of the chip layer of the sample K. The thickness of the chip layer is 40 mm, the surface density thereof is 2.0 kg/m², and the airflow resistance of the uncompressed chip layer along the thickness thereof is 1 × 10³ Ns/m⁴. Similarly to the material of the entry-side coat of the sample B, nonwoven fabric having an airflow resistance of 2.8 × 10⁶ Ns/m⁴ and a thickness of 0.5 mm was used as a material of each of the entry-side coat and the back-surface-side coat of the sample K, based on the results of the previously described first and second evaluations of the characteristics of the sound insulation material 6A. An about 0.08-mm-thick unbreathable polyethylene sheet (having an airflow resistance of greater than or equal to 1 × 10⁹ Ns/m⁴) was used as a material of the intermediate membrane layer of the sample K.

### -Characteristics Evaluation-

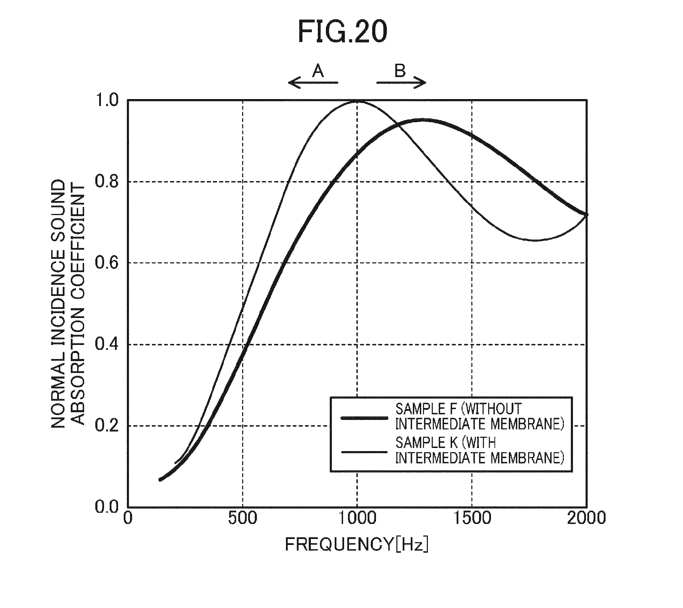

The normal incidence sound absorption coefficient of the uncompressed sample K was measured in a manner identical to that in each of the previous cases. The measurement result and the measurement result of the (uncompressed) sample F obtained by removing the polyethylene sheet (intermediate membrane layer) from the sample K are illustrated in FIG. 20.

The frequency at the peak of the sound absorption coefficient of the sample K is shifted toward lower frequencies than the frequency at the peak of the sound absorption coefficient of the sample F, and the peak sound absorption coefficient of the sample K is also higher than that of the sample F. It is recognized that the sound absorption function of the sample K arising from the resonance of the unbreathable intermediate membrane layer enhances the sound absorption effect of the sample K at about 1000 Hz lower than the frequency (about 1250 Hz) at the peak of the sound absorption coefficient of the sample F without an intermediate membrane layer.

While, in the sample K, the frequency at the peak of the sound absorption coefficient is shifted toward lower frequencies as described above, the degree of reduction in sound absorption coefficient in a high frequency range is not so high. The reason for this may be that although the chip layer of the sample K includes the unbreathable intermediate membrane layer, the elastomeric foam chips between the intermediate membrane layer and the entry-side coat absorb sound similarly to the elastomeric foam chips of the sample F.

Thus, the sound insulation material of the sample K including the unbreathable intermediate membrane layer is placed on an inner fender of a motor vehicle to help reduce engine sound or road noise having a frequency of about 1000 Hz.

When the location of the unbreathable intermediate membrane layer in the chip layer approaches the entry-side coat, the frequency at the peak of the sound absorption coefficient is shifted toward lower frequencies as indicated by the arrow A in FIG. 20. The reason for this is that the unbreathable intermediate membrane layer is susceptible to sound having lower frequencies, and the amount of elastomeric foam chips being closer to a surface of the chip layer through which sound enters the chip layer than the intermediate membrane layer and being effective in absorbing sound having higher frequencies decreases. Alternatively, when the location of the unbreathable intermediate membrane layer in the chip layer approaches the back-surface-side coat opposite to the entry-side coat, the frequency at the peak of the sound absorption coefficient is shifted toward higher frequencies as indicated by the arrow B in FIG. 20. The reason for this is that while the effectiveness of the intermediate membrane layer absorbing sound having lower frequencies decreases, the amount of elastomeric foam chips being closer to a surface of the chip layer through which sound enters the chip layer than the intermediate membrane layer and being effective in absorbing sound having higher frequencies increases.

Thus, the location of the unbreathable intermediate membrane layer in the chip layer is adjusted to obtain desired frequency characteristics of absorbed sound.

### <Second Evaluation of Characteristics of Sound Insulation Material 6C>

### -Sample L-

A sound insulation material sample L was prepared which has a four-layer structure of a chip layer, an entry-side coat, a back-surface-side coat, and an intermediate membrane layer. The intermediate membrane layer was located in a central portion of the chip layer in a thickness direction thereof. The material of chips, and the surface density and airflow resistance of the chip layer are respectively the same as the chip material and the surface density and airflow resistance of the sample G. The same nonwoven fabric as the breathable coat of the sample G was used as a material of each of the entry-side coat and the back-surface-side coat. The same polyethylene sheet as the unbreathable coat of the sample G was used as a material of the intermediate membrane layer.

### -Sample M-

A sound insulation material sample M was prepared which has a five-layer structure of a chip layer, an entry-side coat, a back-surface-side coat, and two intermediate membrane layers. The two intermediate membrane layers were located such that the chip layer is equally divided into three portions along the thickness thereof. The material of chips, and the surface density and airflow resistance of the chip layer are respectively the same as the chip material and the surface density and airflow resistance of the sample L, and nonwoven fabric forming the entry-side coat and the back-surface-side coat and a polyethylene sheet forming the intermediate membrane layers are respectively the same as the nonwoven fabric and the polyethylene sheet of the sample L.

### -Characteristics Evaluation-

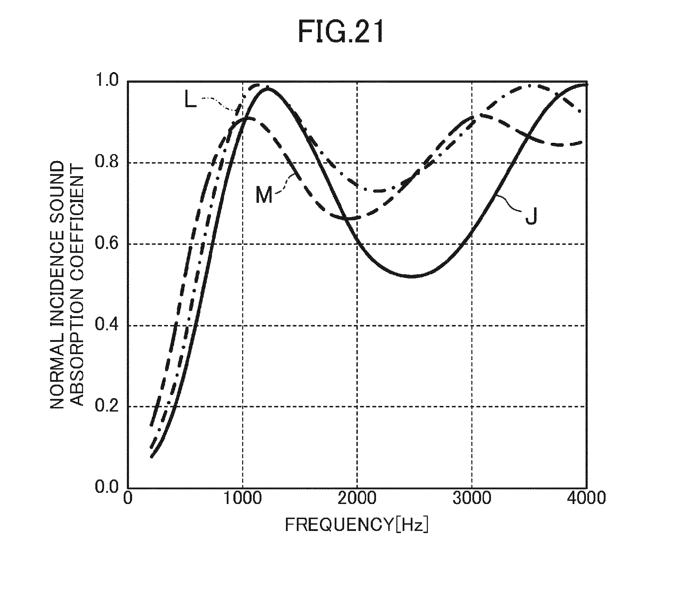

The normal incidence sound absorption coefficients of the uncompressed samples L and M were measured in a manner identical to that in each of the previous cases. Note that the measurements were made in a situation where the back-surface-side coat is removed from each of the samples. The measurement results are illustrated in FIG. 21 together with the measurement result of the sample J. One of the peaks of the sound absorption coefficient of the sample L including the intermediate membrane layer appear in a low frequency range, and the other one thereof appears in a high frequency range. The frequency at each of the peaks is shifted toward lower frequencies than the frequency at a corresponding one of the peaks of the sound absorption coefficient of the sample J without an intermediate membrane layer, and the degree of drop in sound absorption coefficient at about 2500 Hz is low. One of the peaks of the sound absorption coefficient of the sample M including the two intermediate membrane layers appear in a low frequency range, the other one thereof appears in a high frequency range, and the peak sound absorption coefficients are slightly lower than that of the sample L, whereas the frequency at each of the peaks tends to be shifted toward lower frequencies than the frequency at a corresponding one of the peaks of the sound absorption coefficient of the sample L. The samples L and M each including the intermediate membrane layer or layers both have a sound absorption coefficient of greater than or equal to 0.6 at about 600 Hz or more, and thus stably absorb sound, and unlike the sharp drop in sound absorption coefficient of the sample J without an intermediate membrane layer at about 2500 Hz, the sound absorption coefficient of each of the samples L and M does not sharply drop.

The transmission losses of the uncompressed samples L, M, and J were measured without removing the back-surface-side coat (with the back-surface-side coat remaining).

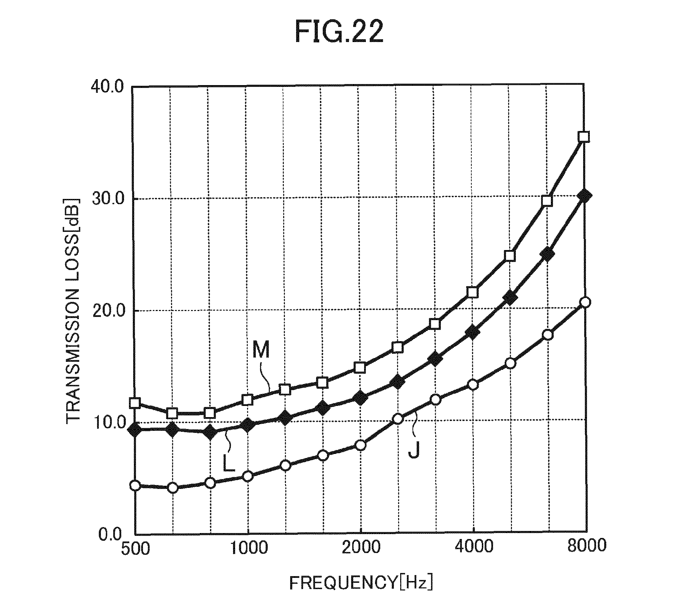

FIG. 22 illustrates the measurement results. The results show that the intermediate membrane layer or layers increase the transmission loss to enhance the sound insulation performance.

### <Third Evaluation of Characteristics of Sound Insulation Material 6C>

### -Samples N, O-

A sound insulation material sample N and a sound insulation material sample O were prepared. The PE chips were used as chips of the sound insulation material N, and the sound insulation material sample N otherwise has the same configuration as the sample L. The PE chips were used as chips of the sound insulation material sample O, and the sound insulation material sample O otherwise has the same configuration as the sample M. The surface density of each of the chip layers including the PE chips is 2.5 kg/m².

### -Characteristics Evaluation-

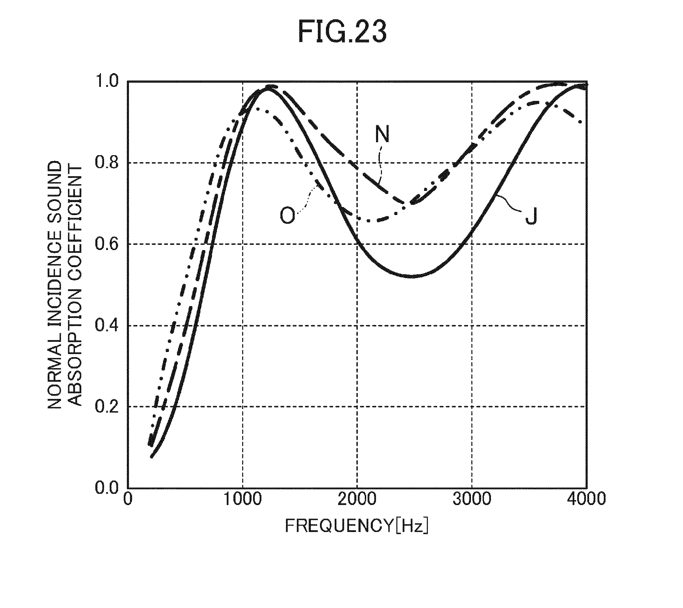

The normal incidence sound absorption coefficients of the uncompressed samples N and O were measured in a manner identical to that in each of the previous cases (in a situation where the back-surface-side coat corresponding to a surface of each of the samples opposite to a surface thereof through which sound enters the sample is removed), and the measurement results are illustrated in FIG. 23 together with the result of the previously described sample J. The samples N and O each exhibit sound absorption characteristics similar to those of a corresponding one of the samples L and M in FIG. 21. Note that the frequency at one of the peaks of the sound absorption coefficient of the sample O in a high frequency range is shifted toward higher frequencies than the frequency at one of the peaks of the sound absorption coefficient of the corresponding sample M in the high frequency range, and the one of the peaks of the sound absorption coefficient of the sample O is higher than that of the sample M.

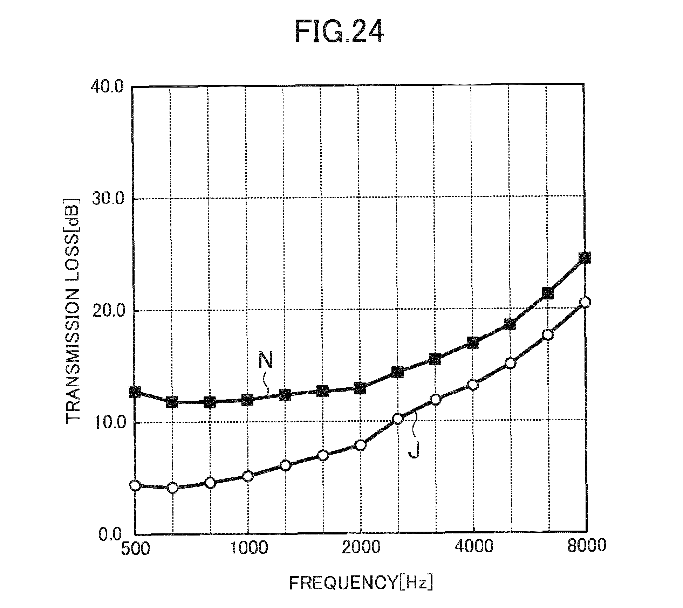

The transmission loss of the uncompressed sample N (including the back-surface-side coat) was measured, and the measurement result is illustrated in FIG. 24 together with the result of the previously described sample J. The results show that while the transmission loss of the sample N is higher than that of the sample J, the transmission loss of the sample N in a low frequency range is higher than that of the corresponding sample L in FIG. 22, and the transmission loss thereof in a high frequency range is lower than that of the corresponding sample L.

### <Fourth Evaluation of Characteristics of Sound Insulation Material 6C>

### -Samples P, Q-

A sound insulation material sample P and a sound insulation material sample Q were prepared. The mixed chips (obtained by mixing elastomeric foam chips and PE chips in a mass ratio of 1:1) were used as chips of the sound insulation material P, and the sound insulation material sample P otherwise has the same configuration as the sample L. The mixed chips were used as chips of the sound insulation material sample Q, and the sound insulation material sample Q otherwise has the same configuration as the sample M. The surface density of each of the chip layers including the mixed chips is 2.5 kg/m².

### -Characteristics Evaluation-

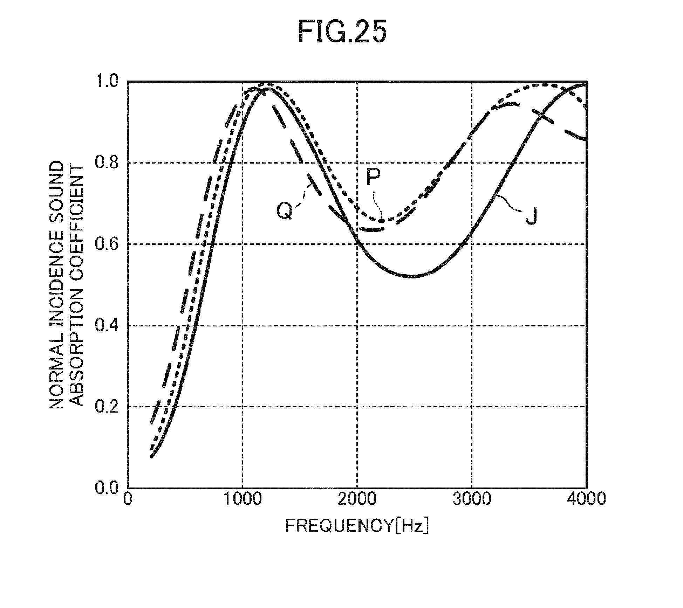

The normal incidence sound absorption coefficients of the uncompressed samples P and Q were measured in a manner identical to that in each of the previous cases (in a situation where the back-surface-side coat corresponding to a surface of each of the samples opposite to a surface thereof through which sound enters the sample is removed), and the measurement results are illustrated in FIG. 25 together with the result of the previously described sample J. The samples P and Q each exhibit sound absorption characteristics similar to those of a corresponding one of the samples L and M in FIG. 21.

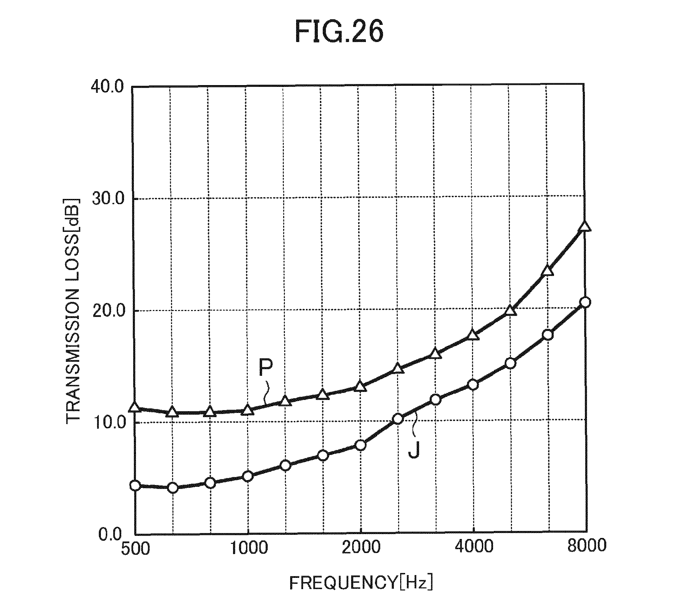

The transmission loss of the uncompressed sample P (including the back-surface-side coat) was measured, and the measurement result is illustrated in FIG. 26 together with the result of the previously described sample J. The transmission loss of the sample P is higher than that of the sample J. Comparison among the sample L in FIG. 22, the sample N in FIG. 24, and the sample P in FIG. 26 shows that the sample P has an intermediate transmission loss between the transmission loss of the sample L and that of the sample N.

FIGS. 21-26 show that while the sound absorption characteristics and the sound insulation characteristics vary depending on the type of chips (elastomeric foam chips, PE chips, and mixed chips), there are little differences in characteristics among the chip types, and when either one of the chip types is selected, good sound absorption characteristics and good sound insulation characteristics are obtained.

### <First Evaluation of Characteristics of Sound Insulation Material 6D>

### -Samples-

A sound insulation material sample R, a sound insulation material sample S (without an intermediate membrane layer), and a sound insulation material sample T (without an intermediate membrane layer) were prepared. The sound insulation material sample R has a three-layer structure of a chip layer, an unbreathable entry-side coat, and an unbreathable intermediate membrane layer. The sound insulation material sample S has a two-layer structure of a chip layer and an unbreathable entry-side coat. The sound insulation material sample T includes only a chip layer. No back-surface-side coat forming a surface of each of the samples opposite to a surface thereof through which sound enters the sample was provided.

The above-described elastomeric foam chips (chips of an EPDM rubber foam (sponge material)) were used as chips forming the chip layer of each of the sample R-T. The average particle size of the elastomeric foam chips is about 2 mm, and the foam density thereof is about 0.3 g/cm³. The chip layer has a thickness of 40 mm, a surface density of 2.0 kg/m², and an airflow resistance of the order of 10³ Ns/m⁴ along the thickness thereof. The airflow resistance was measured in a situation where elastomeric foam chips are stacked to a thickness of 40 mm and are uncompressed.

The entry-side coat of each of the samples R and S and the intermediate membrane layer of the sample R were made of a 0.08-mm-thick unbreathable polyethylene sheet having an airflow resistance of greater than or equal to 1 × 10⁹ Ns/m⁴. The intermediate membrane layer of the sample R is located in a central portion of the chip layer in a thickness direction thereof.

### -Characteristics Evaluation-

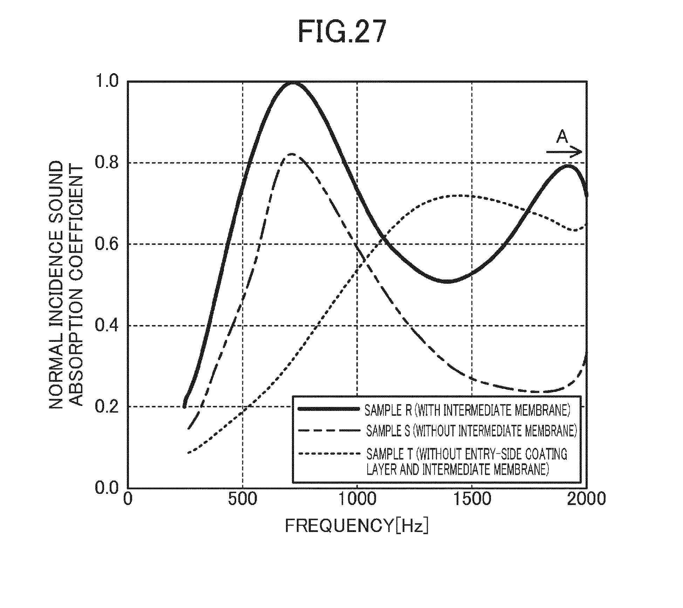

The normal incidence sound absorption coefficient of each of the uncompressed sound insulation material samples R-T was measured in conformity with the JIS A 1405-2 standard. FIG. 27 illustrates the measurement results.

The sample T including only the chip layer 21 exhibits sound absorption characteristics where its sound absorption coefficient reaches a peak at about 1250 Hz. In contrast, the frequency at the peak of the sound absorption coefficient of the sample S including the unbreathable sheet as the entry-side coat is shifted to about 700 Hz which is lower than the frequency at the peak of the sound absorption coefficient of the sample T without an entry-side coat, and the sound absorption coefficient of the sample S significantly drops in the high frequency range from 1000 Hz to 2000 Hz. The evaluation results of the sample S and T show that if the unbreathable entry-side coat is merely used, the sound absorption performance in a low frequency range is enhanced, whereas a sharp dip is observed in the high frequency range.

In contrast, the peak sound absorption coefficient of the sample R including the unbreathable entry-side coat and the unbreathable intermediate membrane layer at about 700 Hz is much higher than that of the sample S, and the size of a dip in sound absorption coefficient of the sample R at about 1400 Hz is also smaller than that of the sample S. This shows that when the chip layer includes the unbreathable entry-side coat and the unbreathable intermediate membrane layer, excellent sound absorption performance is obtained in a wide frequency range. Such excellent sound absorption performance may relate to the fact that the airflow resistance of the chip layer is on the order of 10³ Ns/m⁴.

### <Second Evaluation of Characteristics of Sound Insulation Material 6D>

### -Samples-

Sound insulation material samples U and V were prepared. The chip layer of each of the samples U and V has a thickness of 20 mm and a surface density of 1 kg/m², and the samples U and V otherwise have the same configurations as the samples R and S, respectively. Specifically, the sample U is a sound insulation material having a three-layer structure of a chip layer, an unbreathable entry-side coat, and an unbreathable intermediate membrane layer, and the sample V is a sound insulation material (without an intermediate membrane layer) having a two-layer structure of a chip layer and an unbreathable entry-side coat.

### -Characteristics Evaluation-

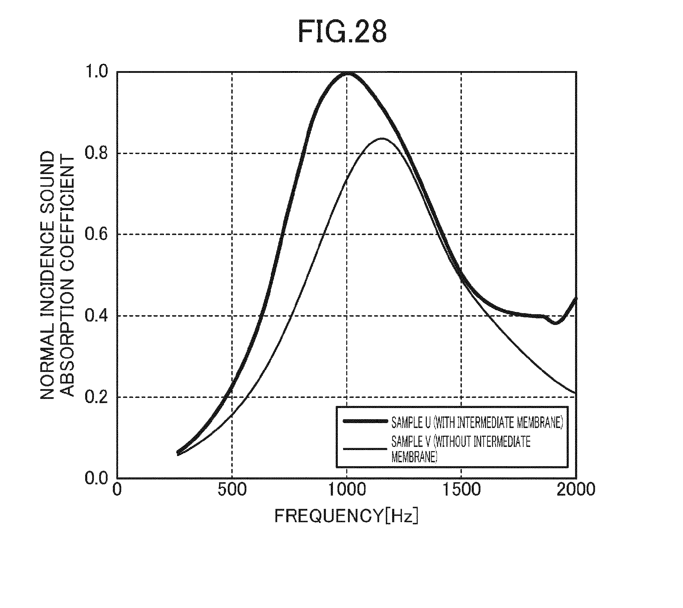

The normal incidence sound absorption coefficient of each of the uncompressed sound insulation material samples U and V was measured in a manner identical to that in the previously described first evaluation. FIG. 28 illustrates the measurement results. Comparison between the results in FIG. 28 and the results in FIG. 27 shows that a reduction in the thickness of the chip layer (with a surface density of 1 kg/m²) allows the frequency at the peak of the sound absorption coefficient to be slightly shifted toward higher frequencies. Note that the amount by which the frequency at the peak of the sound absorption coefficient of the sample U including the intermediate membrane layer is shifted is smaller than the amount by which the frequency at the peak of the sound absorption coefficient of the sample V without the intermediate membrane layer is shifted. A situation where the amount by which the frequency at the peak of the sound absorption coefficient is shifted varies between the samples U and V means that the effect of reducing the thickness of the chip layer (with a surface density of 1 kg/m²) varies between the samples U and V. Specifically, it is estimated that in the sample U, the chip layer and the intermediate membrane layer combine to achieve the sound absorption effect. Eventually, the sound absorption coefficient of the sample U in a lower frequency range is higher than that of the sample V therein.

### <Other Embodiments>

In the embodiment, an example in which the sound insulation material according to the present disclosure is used while being placed on, for example, an inner fender of a motor vehicle was described. However, the sound insulation material can be used not only for the inner fender but also for other portions of a motor vehicle, such as a dash panel. The sound insulation material according to the present disclosure can be utilized to insulate sound in not only automobiles but also other vehicles, such as electric trains and planes, and constructions, such as buildings.

### DESCRIPTION OF REFERENCE CHARACTERS

- 1: Motor Vehicle
- 2: Front Fender
- 5: Inner Fender
- 6: Sound Insulation Material
- 11: Flat Bag
- 12: Chip
- 21: Chip Layer
- 22: Entry-Side Coating Layer
- 23: Back-Surface-Side Coating Layer
- 24, 27: Unbreathable Intermediate Membrane Layer
- 25, 29: Unbreathable Coating Layer

## Claims

1. A sound insulation material comprising:
a chip layer containing many chips, wherein
the chip layer is covered with a coat, and
the chip layer includes an unbreathable intermediate membrane layer dividing the chip layer into a plurality of layers.

2. The sound insulation material of claim 1, wherein
a portion of the coat covering one or the other one of surfaces of the chip layer is breathable.

3. The sound insulation material of claim 1, wherein
a portion of the coat covering one of surfaces of the chip layer is unbreathable.

4. The sound insulation material of claim 3, wherein
a portion of the coat covering the other one of the surfaces of the chip layer is breathable.

5. The sound insulation material of claim 3 or 4, wherein
target sound to be insulated enters the sound insulation material through the unbreathable portion of the coat covering the one of the surfaces of the chip layer.

6. The sound insulation material of claim 4, wherein
target sound to be insulated enters the sound insulation material through the breathable portion of the coat covering the other one of the surfaces of the chip layer.

7. The sound insulation material of any one of claims 3-6, wherein
an airflow resistance of the chip layer along a thickness of the chip layer is on an order of 10³ Ns/m⁴, and
an airflow resistance of the unbreathable portion of the coat covering the one of the surfaces of the chip layer along a thickness of the unbreathable portion of the coat is greater than or equal to 10⁹ Ns/m⁴.

8. The sound insulation material of any one of claims 4-7, wherein
an airflow resistance of the chip layer along a thickness of the chip layer is on an order of 10³ Ns/m⁴, and
an airflow resistance of the breathable portion of the coat covering the other one of the surfaces of the chip layer along a thickness of the breathable portion of the coat is in a range from on an order of 10⁵ Ns/m⁴ to on an order of 10⁸ Ns/m⁴.

9. A sound insulation material comprising:
a chip layer containing many chips, wherein
one of surfaces of the chip layer is covered with an unbreathable coat, and
the other one of the surfaces of the chip layer is covered with a breathable coat.

10. The sound insulation material of claim 9, wherein
the sound insulation material is provided on a motor vehicle such that the unbreathable coat faces inwardly of the motor vehicle, and the breathable coat faces outwardly of the motor vehicle.

11. The sound insulation material of claim 9 or 10, wherein
an airflow resistance of the chip layer along a thickness of the chip layer is on an order of 10³ Ns/m⁴, and
an airflow resistance of the breathable coat along a thickness of the breathable coat is in a range from on an order of 10⁵ Ns/m⁴ to on an order of 10⁸ Ns/m⁴.

12. A sound insulation material comprising:
a chip layer containing many chips; and
a breathable coat covering at least one of surfaces of the chip layer, wherein
an airflow resistance of the chip layer along a thickness of the chip layer is on an order of 10³ Ns/m⁴, and
an airflow resistance of the breathable coat along a thickness of the breathable coat is in a range from on an order of 10⁵ Ns/m⁴ to on an order of 10⁸ Ns/m⁴.

13. The sound insulation material of any one of claims 1-12, wherein
the chip layer has a dynamic longitudinal elastic modulus of greater than or equal to 1 × 10⁵ N/m² and equal to or less than 1 × 10⁷ N/m² within a range from 100 Hz to 1000 Hz, and a loss factor of greater than or equal to 0.05 and equal to or less than 0.5.

14. The sound insulation material of any one of claims 1-13, wherein
the chips have a volume density, which is an apparent density under conditions where the chips are charged into a container in a free state (uncompressed state), of greater than or equal to 0.01 g/cm³ and equal to or less than 0.99 g/cm³, preferably greater than or equal to 0.03 g/cm³ and equal to or less than 0.5 g/cm³.

15. The sound insulation material of any one of claims 1-14, wherein
the chip layer contains one type of chips selected from chips made of a foam of olefinic elastic material, chips made of a foam of olefinic nonelastic material, chips made of a solid of olefinic elastic material, and chips made of a solid of olefinic nonelastic material, or a mixture of two or more types of chips selected therefrom.

16. The sound insulation material of any one of claims 1-15, wherein
the chips are made of EPDM rubber and/or polyethylene.

17. The sound insulation material of any one of claims 1-8, wherein
the sound insulation material includes the many chips enclosed in a flat bag,
an unbreathable membrane partitions an interior of the flat bag into a space toward one surface of the flat bag and a space toward the other surface thereof,
the many chips are charged into both of the spaces,
both of the surfaces of the flat bag form the coat,
the unbreathable membrane forms the unbreathable intermediate membrane layer, and
the chips charged into both of the spaces form the chip layer.

18. The sound insulation material of any one of claims 9-11, wherein
the sound insulation material includes the many chips enclosed in a flat bag,
the flat bag internally includes an unbreathable sheet,
the many chips are charged between one surface of the flat bag and the unbreathable sheet,
the one surface of the flat bag forms the breathable coat,
the unbreathable sheet forms the unbreathable coat, and
the many chips charged between the one surface of the flat bag and the unbreathable sheet form the chip layer.

19. The sound absorbing material of claim 12, wherein
the sound insulation material includes the many chips enclosed in a flat bag,
one surface of the flat bag forms the breathable coat, and
the many chips enclosed in the flat bag form the chip layer.
